# EUROPEAN PATENT APPLICATION

(11) **EP 4 395 163 A1**
(43) Date of publication of application: **03.07.2024**
(21) Application number: 23834974.0
(22) Date of filing: 14.08.2023
(51) Int. Cl.: H02S 40/10

(54) **CLEANING APPARATUS FOR SURFACE SUBMERGED IN LIQUID**

(30) Priority: 06.07.2022 CN 202210790492; 30.01.2023 CN 202310044976; 30.01.2023 CN 202310044978; 30.01.2023 CN 202310044980
(71) Applicant: Wybotics Co., Ltd, Tianjin 300462 (CN)
(72) Inventor: YU, Qian, Tianjin 300462 (CN); GENG, Cuixiao, Tianjin 300462 (CN)
(74) Representative: Bayramoglu et al.
(86) International application number: PCT/CN2023/112903
(87) International publication number: WO 2024/008209

(57) **Abstract**

The present disclosure provides a cleaning apparatus for a surface submerged in a liquid, including: an apparatus body; and an automatic rising-sinking structure, where through an operation of the automatic rising-sinking structure, the apparatus body rises or sinks. The present disclosure has the following beneficial effects: The cleaning apparatus for the surface submerged in the liquid automatically rises and sinks through the automatic rising-sinking structure, without being manually searched and lifted out of a water surface. The cleaning apparatus for the surface submerged in the liquid can also automatically rises out of the water surface when a filter box is to be cleaned or machine maintenance is required. The present disclosure reduces a manual labor, shortens searching time, and improves a working efficiency.

## Description

### TECHNICAL FIELD

The present disclosure relates to the technical field of underwater cleaning, and in particular to a cleaning apparatus for a surface submerged in a liquid.

### BACKGROUND

In the prior art, the electric energy of a solar cell comes only from a solar panel. In the case of severe weather or overcasts or the like, solar energy cannot produce electric energy, and a device needing to be charged cannot be powered. Moreover, the length of a cable connected between the cell and the device cannot be adjusted. To meet cable requirements of different ponds or devices, the cable must be changed. If a solar conversion unit is used for charging, the device needs to come out of a water surface, and energy conversion can only be realized at an appropriate light intensity. If a corded power source is used for charging, the cable is intertwined in traveling of the underwater cleaning apparatus.

When a cleaning apparatus for a surface submerged in a liquid completes its work, and a filter box needs to be cleaned or maintenance is required, the cleaning apparatus for the surface submerged in the liquid stops working and stays at a bottom of the pond. The cleaning apparatus is searched for manually and taken out from the pond, with a long time and high labor cost.

In existing markets, the underwater cleaning apparatus with a built-in lithium-ion cell is charged through a charging port. A charging pin is connected to a charging stand through a pin head and a pin sleeve. This method will accumulate water to cause electrolytic corrosion in charging.

Concerning magnetic charging, a charging pin is connected to a charging stand through a magnetic attraction force. The charging stand may be provided with a spring contact. While achieving hard water accumulation, convenience in cleaning, and less electrolytic corrosion, this can ensure reliable connection through the spring contact and the magnetic attraction force.

However, the structure using the spring contact and the magnetic attraction force is prone to arc discharge once plugged or unplugged, thus causing irreversible damage to the charging pin and a coating of the charging stand.

### SUMMARY

In view of the above problems, the present disclosure provides a cleaning apparatus for a surface submerged in a liquid, to solve the above-mentioned or other problems in the prior art.

To solve the above technical problems, the present disclosure adopts the following technical solutions: A cleaning apparatus for a surface submerged in a liquid includes:
an apparatus body; and
an automatic rising-sinking structure, where through an operation of the automatic rising-sinking structure, the apparatus body rises or sinks.

Further, the automatic rising-sinking structure is a buoyancy adjusting structure; and by adjusting a buoyancy, the cleaning apparatus for a surface submerged in a liquid rises or sinks.

Further, the automatic rising-sinking structure is constructed as follows:
a pump does not work, and when submerged in a liquid, the cleaning apparatus for a surface submerged in a liquid rises due to a buoyancy greater than a gravity, until being partially exposed out of a liquid surface; and
the pump works, and the cleaning apparatus for a surface submerged in a liquid is pressed on a submerged surface through a pressure of a liquid produced when the pump works.

Further, the automatic rising-sinking structure is constructed as follows:
a pump works at a first pumping pressure, and when submerged in a liquid, the cleaning apparatus for a surface submerged in a liquid rises due to a buoyancy greater than a gravity, until being partially exposed out of a liquid surface; and
the pump works at a second pumping pressure greater than the first pumping pressure, and the cleaning apparatus for a surface submerged in a liquid is pressed on a submerged surface through a pressure of a liquid produced when the pump works at the second pumping pressure.

Further, the cleaning apparatus for a surface submerged in a liquid is applied to cleaning a pool, and a charging station is located at a bank of the pool.

Further, in a height direction, the charging station is located at any one of following positions on a wall of the pool:
a position between a bottom of the pool and a pool water surface;
a position near the pool water surface; and
a position above the pool water surface.

Further, the charging station is floated on a pool water surface.

Further, the cleaning apparatus for a surface submerged in a liquid further includes a wireless charging module provided on the apparatus body, where the wireless charging module charges a cell in the apparatus body.

Further, the buoyancy adjusting structure includes a structural main body with an opening at an end, a partition device provided in the structural main body, and a power device for driving the partition device to move; the partition device partitions an internal space of the structural main body to form an airtight space; the partition device moves relative to the structural main body; and the buoyancy in water is adjusted by changing a volume of the airtight space, such that the apparatus body rises and sinks.

Further, the wireless charging module includes a receiving terminal, and the receiving terminal is connected to the cell in the apparatus body.

Further, the cleaning apparatus for a surface submerged in a liquid further includes a position detecting module; the position detecting module is connected to a controller in the apparatus body; the position detecting module detects a position of a wireless-charging transmitting terminal; and the controller controls the apparatus body to travel.

Further, the cleaning apparatus for a surface submerged in a liquid further includes a capacity detecting module; the capacity detecting module is connected to a controller and the cell in the apparatus body, and configured to detect a remaining capacity of the cell and send the remaining capacity to the controller; and the controller is configured to:
according to the received remaining capacity,
send a rising instruction to the power device, such that the power device drives the partition device to move, the airtight space increases and the apparatus body rises; and
send a sinking instruction to the power device, such that the power device drives the partition device to move, the airtight space decreases and the apparatus body sinks.

Further, the cleaning apparatus for a surface submerged in a liquid further includes an energy assembly; the energy assembly includes a photovoltaic power generation unit and an energy storage module; the photovoltaic power generation unit supplies power to the apparatus body; and alternatively, the photovoltaic power generation unit supplies power to the apparatus body through the energy storage module.

Further, the photovoltaic power generation unit is located on an upper surface of the apparatus body, and the upper surface is an upward surface of the apparatus body in a floated state.

Further, the apparatus body further includes a filter box provided on a path of a water channel, so as to intercept dirt in water flowing through the water channel; and
a filter chamber for accommodating the filter box is formed in the apparatus body; and an opening for allowing the filter box to get in and out is formed in an upper wall, a bottom wall or a circumferential wall of the filter chamber.

Further, the opening is formed in the upper wall of the filter chamber; the upper wall is an upward wall of the apparatus body in the floated state; and the apparatus body further includes a cover plate configured to cover the opening in an openable and closable manner; and
the photovoltaic power generation unit is arranged along a surface of the cover plate away from the opening.

Further, the energy assembly is provided on the apparatus body, and rises or sinks synchronously with the apparatus body.

Further, the cleaning apparatus for a surface submerged in a liquid further includes a capacity detecting unit; the capacity detecting unit is connected to the energy storage module and a controller in the apparatus body, and configured to detect a remaining capacity of the energy storage module and send the remaining capacity to the controller; and the controller is configured to:
according to the received remaining capacity,
send a rising instruction to the power device, such that the power device drives the partition device to move, the airtight space increases and the apparatus body rises; and
send a sinking instruction to the power device, such that the power device drives the partition device to move, the airtight space decreases and the apparatus body sinks.

Further, the cleaning apparatus for a surface submerged in a liquid further includes a wireless control terminal and a wireless communication module; and the controller in the apparatus body communicates with the wireless control terminal through the wireless communication module;
the wireless control terminal is configured to:
receive the remaining capacity from the controller and output a user-perceptive remaining capacity prompt; and
send a manual rising instruction and a manual sinking instruction to the controller through the wireless communication module based on a user input; and
the controller is further configured to:
   send the rising instruction to the power device based on the received manual rising instruction; and
   send the sinking instruction to the power device based on the received manual sinking instruction.

Further, the controller is configured to:
allow, if a percentage of the remaining capacity is ≥M%, the cleaning apparatus for a surface submerged in a liquid to sink; and
allow, if the percentage of the remaining capacity is ≤N%, M>N, the cleaning apparatus for a surface submerged in a liquid to rise.

Further, the controller is further configured to generate a rechargeable time period and a non-rechargeable time period based on a light intensity;
allow, if the percentage of the remaining capacity is ≤N%, and present time falls within the rechargeable time period, the cleaning apparatus for a surface submerged in a liquid to rise; and
allow, if the percentage of the remaining capacity is ≤N%, and the present time falls within the non-rechargeable time period, the cleaning apparatus for a surface submerged in a liquid to halt, until transitioning to the rechargeable time period.

Further, the cleaning apparatus for a surface submerged in a liquid further includes an activity detecting unit in signal connection with the controller and configured to detect whether the pool is used, where
if receiving information that the pool is used, the controller sends the rising instruction to the power device.

Further, the activity detecting unit includes a water surface fluctuation detection unit configured to detect a fluctuation of a pool water surface.

Further, the energy assembly further includes a heat dissipation element; and the heat dissipation element is connected to the energy storage module to dissipate heat of the energy storage module.

Further, the energy assembly further includes at least one charging port; and the energy storage module is connected to the charging port.

Further, the wireless communication module includes at least one of a wireless fidelity (WiFi) communication module, a Bluetooth communication module, a fourth-generation (4G) module, a fifth-generation (5G) module, or a general packet radio service (GPRS) module.

Further, the cleaning apparatus for a surface submerged in a liquid further includes a contact interface structure connected to a cell on the apparatus body; and when the cleaning apparatus for a surface submerged in a liquid is to be charged, the automatic rising-sinking structure operates, such that the cleaning apparatus for a surface submerged in a liquid rises or sinks, and is charged through the contact interface structure; and
after floating up, the cleaning apparatus for a surface submerged in a liquid is electrically connected to the charging station through the contact interface structure.

Further, the contact interface structure is a magnetic interface structure; and the magnetic interface structure includes:
a first magnetic connection assembly provided with a charging pin set and a detecting pin set; and
a second magnetic connection assembly including a detection control device, a charging stand set corresponding to the charging pin set, a detecting stand set corresponding to the detecting pin set, and a switch assembly, where a magnetism of the first magnetic connection assembly is opposite to a magnetism of the second magnetic connection assembly; and the detection control device is configured to:
   connect, if the detecting pin set contacts the detecting stand set, the switch assembly, such that a charging loop is turned on; and
   disconnect, if the detecting pin set is disconnected from the detecting stand set, the switch assembly, such that the charging loop is turned off.

Further, a distance from a terminal of the detecting pin set to a terminal of the detecting stand set is greater than a distance from a terminal of the charging pin set to a terminal of the charging stand set.

Further, the detection control device includes:
a switch circuit module configured to control connection and disconnection of the switch assembly.

Further, the detection control device further includes:
an acceleration module connected to the switch circuit module, and configured to accelerate a switching speed of the switch circuit module; and/or,
a current delayed increasing module connected to the switch circuit module, and configured to increase a current in the switch circuit module with a delay.

Further, the switch circuit module includes a first triode circuit and a second triode circuit that are connected to each other;
the first triode circuit includes a first triode, a first resistor, a second resistor, and a third resistor; a first terminal of the second resistor is connected to the first resistor, and a second terminal of the second resistor is grounded; and a base of the first triode is connected to a common connection junction between the first resistor and the second resistor, a collector of the first triode is connected to a first terminal of the third resistor, and an emitter of the first triode is grounded; and
the second triode circuit includes a second triode, a fourth resistor, and a fifth resistor; a second terminal of the third resistor is connected to a first terminal of the fourth resistor; a second terminal of the fourth resistor is connected to the detecting stand set; and a base of the second triode is connected to a common connection junction between the third resistor and the fourth resistor, an emitter of the second triode is connected to the detecting stand set, and a collector of the second triode is connected to the switch assembly through the fifth resistor.

Further, the acceleration module includes a capacitor; and the capacitor is connected to two terminals of the first resistor in parallel.

Further, the current delayed increasing module includes an inductor; and a first terminal of the inductor is connected to the detecting stand set, and a second terminal of the inductor is connected to the first resistor through a sixth resistor.

Further, a common connection junction between the first resistor and the sixth resistor is connected to a first terminal of a seventh resistor, and a second terminal of the seventh resistor is grounded.

Further, the charging pin set at least includes a positive charging pin and a negative charging pin; and there is at least one detecting pin in the detecting pin set.

Further, the charging stand set at least includes a positive charging stand corresponding to the positive charging pin and a negative charging stand corresponding to the negative charging pin; a number of detecting stands in the detecting stand set is the same as a number of the detecting pins in the detecting pin set; and positions of the detecting stands in the detecting stand set are in one-to-one correspondence with positions of the detecting pins in the detecting pin set.

Further, the positive charging stand is connected to a positive electrode of the cell, and the negative charging stand is connected to a negative electrode of the cell.

Further, the switch assembly is connected between the positive charging stand and the positive electrode of the cell; and alternatively, the switch assembly is connected between the negative charging stand and the negative electrode of the cell.

Further, a first diode is connected between the positive charging stand and the positive electrode of the cell; and a positive electrode of the first diode is connected to the positive charging stand, and a negative electrode of the first diode is connected to the positive electrode of the cell.

Further, a second diode is connected between the detecting stand set and the detection control device; and a positive electrode of the second diode is connected to the detecting stand set, and a negative electrode of the second diode is connected to the detection control device.

Further, the switch assembly is an electronic switch.

Further, the electronic switch is one or more of a metal oxide semiconductor (MOS) transistor, a triode, and a diode.

Further, the partition device includes a partition element and a sealing element provided at a periphery of the partition element; the partition element contacts an inner wall of the structural main body; and the sealing element seals a contact position between the partition element and the structural main body.

Further, the power device includes a power assembly and a power transmission assembly connected to the power assembly; and the power assembly drives the power transmission assembly to operate, thereby driving the partition device to move.

Further, the power transmission assembly includes a rotating element, a movable element provided on the rotating element and configured to move relative to the rotating element, and a telescopic element connected to the movable element; an end of the telescopic element is connected to the partition device; and the rotating element drives the movable element to move, such that the telescopic element is lengthened or shortened to drive the partition device to move.

Further, the telescopic element is a scissor structure; and the rotating element is a lead screw.

Further, the power assembly includes a power element and a transmission element connected to the power element; and the transmission element is connected to the rotating element, and configured to drive the rotating element to rotate.

Further, a guiding element is provided on the telescopic element; a sliding chute is formed at a corresponding position on the inner wall of the structural main body; and the guiding element is inserted into the sliding chute and slides along the sliding chute.

Further, the power transmission assembly includes a first rotating element, a second rotating element, and a flexible element wound on the first rotating element and the second rotating element; the first rotating element is rotatably connected to the partition device; the second rotating element is rotatably connected to the structural main body; one end of the flexible element is connected to the structural main body, and the other end of the flexible element is connected to the power assembly; and the power assembly drives the flexible element to operate, such that the first rotating element and the second rotating element rotate to drive the partition device to move.

Further, the power transmission assembly includes a third rotating element rotatably connected to the structural main body; one end of the third rotating element is rotatably connected to the partition device, and the other end of the third rotating element is connected to the power assembly; and the third rotating element rotates to drive the partition device to move.

Further, the structural main body is a cylindrical structure with one end closed and the other end open; the open end of the structural main body is provided with an end cover; and a water discharge hole is formed in the end cover.

Further, the airtight space is formed between the partition device and the closed end of the structural main body; and alternatively, a spacer is provided in the structural main body, and the airtight space is formed between the partition device and the spacer.

Further, the power assembly is provided outside the structural main body; and alternatively, the power assembly is provided in a space formed between the spacer and the closed end of the structural main body.

According to the above technical solutions, the cleaning apparatus for a surface submerged in a liquid includes the buoyancy adjusting structure. The buoyancy adjusting structure forms the airtight space in the structural main body. By changing a volume of the airtight space, a buoyancy of the buoyancy adjusting structure is controlled. With the adjustable buoyancy, the buoyancy adjusting structure can rise or sink in water. The buoyancy adjusting structure is provided in a cleaning drum of the cleaning apparatus for a surface submerged in a liquid, such that the cleaning apparatus for a surface submerged in a liquid has an adjustable buoyancy, and the cleaning apparatus for a surface submerged in a liquid automatically rises out of a water surface when to be charged. The cleaning apparatus for a surface submerged in a liquid can also automatically rises out of the water surface when a filter box is to be cleaned or machine maintenance is required, without being manually searched and lifted out of the water surface. This reduces a manual labor, shortens searching time, and improves a working efficiency. With the internal space of the cleaning drum for providing the cleaning apparatus for a surface submerged in a liquid, improvement on an overall structure of the cleaning apparatus for a surface submerged in a liquid turns out to be unnecessary.

The cleaning apparatus for a surface submerged in a liquid includes the wireless charging module, such that the cleaning apparatus for a surface submerged in a liquid can be charged wirelessly without a cable. The cleaning apparatus for a surface submerged in a liquid can be charged wirelessly, and thus is not limited by an environment.

The capacity detecting module can monitor the remaining capacity of the cell in the apparatus body, and sends the remaining capacity to the controller. The controller controls the buoyancy adjusting structure according to the remaining capacity. Alternatively, the controller sends the remaining capacity of the cell to the wireless control terminal through the wireless communication module. The rising instruction or the sinking instruction is input by the user to control the cleaning apparatus for a surface submerged in a liquid to rise or sink. Therefore, the cleaning apparatus for a surface submerged in a liquid automatically rises or sinks when to be charged.

When the cleaning apparatus for a surface submerged in a liquid rises to the water surface, the position detecting module detects the position of the wireless-charging transmitting terminal, and sends the position to the controller. The controller controls the cleaning apparatus for a surface submerged in a liquid to travel close to the wireless-charging transmitting terminal, such that the receiving terminal of the wireless charging module corresponds to the wireless-charging transmitting terminal for wireless charging. Therefore, the cleaning apparatus for a surface submerged in a liquid automatically searches the wireless-charging transmitting terminal.

The solar panel can convert light energy into electric energy, and store the electric energy to the energy storage module, so as to supply power to the apparatus body. The apparatus body is continuously powered with a clean energy source, thereby being more environment-friendly. In case of a power shortage of the solar energy, the energy storage module can be connected to an external power source to continuously supply the power to the device. This is energy-saving and can ensure normal use of the device.

The wireless control terminal communicates with the controller through the wireless communication module. Based on information such as the remaining capacity of the energy storage module, whether present time falls within the rechargeable time period, and whether the pool is used, the rising or sinking instruction can be input at the wireless control terminal, to control the cleaning apparatus for a surface submerged in a liquid to rise and sink. This can realize remote control on the cleaning apparatus for a surface submerged in a liquid. Through the remote control, a rising state, a sinking state and an underwater working state of the cleaning apparatus for a surface submerged in a liquid can be controlled.

While a density of a material of the cleaning apparatus is less than a density of the liquid, the automatic rising-sinking structure can further control the cleaning apparatus to rise or sink automatically according to a principle that a buoyancy is greater than the gravity when the pump does not work, and a buoyancy is less than a sum of the gravity and the pressure when the pump works. Alternatively, while the density of the material of the cleaning apparatus is less than the density of the liquid, a working pumping pressure of the pump is controlled, thereby controlling a relation between the buoyancy and the sum of the gravity and the pressure to realize automatic rise or sink of the cleaning apparatus. The machine is not manually searched and lifted out of the water surface, and this reduces the manual labor.

The cleaning apparatus for a surface submerged in a liquid includes the magnetic interface structure. The switch assembly is normally open. In response to insertion, the charging pin set contacts the charging stand set first. When the charging pin set almost or just contacts the charging stand set, the switch assembly is disconnected. The charging loop connected between the charging pin set and the charging stand set is turned off. Neither a voltage nor a current exists between the charging pin set and the charging stand set.

While the insertion (the insertion is realized through a magnetic attraction force between the first magnetic connection assembly and the second magnetic connection assembly at the opposite magnetisms) is continued, the detecting pin set contacts the detecting stand set. In this case, the switch assembly operates, and it can be determined that "the charging pin set is reliably connected to the charging stand set". The switch assembly is switched from a disconnected state to a connected state. The charging loop between the charging pin set and the charging stand set is turned on for charging. At the beginning of the charging, the charging pin set is reliably connected to the charging stand set, thus preventing arc discharge.

When the charging is terminated for completion (or other needs), the first magnetic connection assembly is gradually separated from the second magnetic connection assembly, the detecting pin set is disconnected from the detecting stand set, and the switch assembly is disconnected. From initial separation to disconnection of the switch assembly, the charging pin set is always reliably connected to the charging stand set to prevent arc discharge. After the switch assembly is disconnected, since the charging loop is turned off when the charging pin set and the charging stand set are almost or just separated, there is no arc discharge between the charging pin set and the charging stand set.

The head end of the detecting pin and the head end of the charging pin are not flush, with a distance difference therebetween. Through cooperation between the detection control device and the switch assembly, a time difference in contact between the charging pin and the charging stand is formed, thereby forming the reliable charging loop. In response to charging, the charging loop is turned on with a delay. In response to an outage (the charging is terminated), the charging loop is turned off in advance to reduce arc discharge. This prolongs a service life of the charging pin and the charging stand, protects the charging pin and the coating of the charging stand, and is safe and reliable in use.

The magnetism of the first magnetic connection assembly is opposite to the magnetism of the second magnetic connection assembly. Under a mutual magnetic attraction force, the first magnetic connection assembly and the second magnetic connection assembly are centered, such that the charging pin set is aligned at the charging stand set, and the detecting pin set is aligned at the detecting stand set, to prevent a phenomenon that "the contact between the detecting pin set and the detecting stand set is earlier than the contact between the charging pin set and the charging stand set in the insertion" due to mutual inclination between the first magnetic connection assembly and the second magnetic connection assembly. With the accurate and reliable contact, reliable connection is formed to prevent a misjudgment (in the charging insertion, the contact between the detecting pin set and the detecting stand set is earlier than the contact between the charging pin set and the charging stand set. In the outage separation, separation between the detecting pin set and the detecting stand set is later than separation between the charging pin set and the charging stand set), thereby further reducing the arc discharge.

### BRIEF DESCRIPTION OF THE DRAWINGS

FIG. 1 is a first schematic structural view of a buoyancy adjusting structure according to an embodiment of the present disclosure;
FIG. 2 is a schematic structural view of a transmission element in a first structure of a buoyancy adjusting structure according to an embodiment of the present disclosure;
FIG. 3 is a schematic structural view of a first structure of a buoyancy adjusting structure from one perspective according to an embodiment of the present disclosure (an end cover, a first gear, and a second gear are not shown);
FIG. 4 is a schematic structural view of an end cover in a first structure of a buoyancy adjusting structure according to an embodiment of the present disclosure;
FIG. 5 is a second schematic structural view of a buoyancy adjusting structure according to an embodiment of the present disclosure;
FIG. 6 is a third schematic structural view of a buoyancy adjusting structure according to an embodiment of the present disclosure;
FIG. 7 is a schematic structural view of a cleaning apparatus for a surface submerged in a liquid according to an embodiment of the present disclosure;
FIG. 8 is a control block diagram according to an embodiment of the present disclosure;
FIG. 9 is a schematic structural view of a cleaning apparatus for a surface submerged in a liquid according to an embodiment of the present disclosure (an energy assembly is provided);
FIG. 10 is a control block diagram of a cleaning apparatus for a surface submerged in a liquid when an energy assembly is provided according to an embodiment of the present disclosure;
FIG. 11 is a schematic perspective view of a first magnetic connection assembly according to an embodiment of the present disclosure;
FIG. 12 is a schematic sectional view of a first magnetic connection assembly according to an embodiment of the present disclosure;
FIG. 13 is a schematic perspective view of a second magnetic connection assembly according to an embodiment of the present disclosure;
FIG. 14 is a schematic sectional view of a second magnetic connection assembly according to an embodiment of the present disclosure;
FIG. 15 is a schematic structural view of a magnetic interface structure according to an embodiment of the present disclosure;
FIG. 16 is a schematic view of a circuit structure of a second magnetic connection assembly according to an embodiment of the present disclosure;
FIG. 17 is a schematic structural view when a first magnetic connection assembly does not contact a second magnetic connection assembly according to an embodiment of the present disclosure;
FIG. 18 is a schematic structural view when a first magnetic connection assembly contacts a second magnetic connection assembly according to an embodiment of the present disclosure;
FIG. 19 is a schematic view when a first magnetic connection assembly and a second magnetic connection assembly get close to each other, and a positive charging pin and a positive charging stand, as well as a negative charging pin and a negative charging stand, contact to form reliable connection according to an embodiment of the present disclosure;
FIG. 120 is a schematic view when a first magnetic connection assembly and a second magnetic connection assembly get close to each other, and a detecting pin and a detecting stand contact to form reliable connection according to an embodiment of the present disclosure;

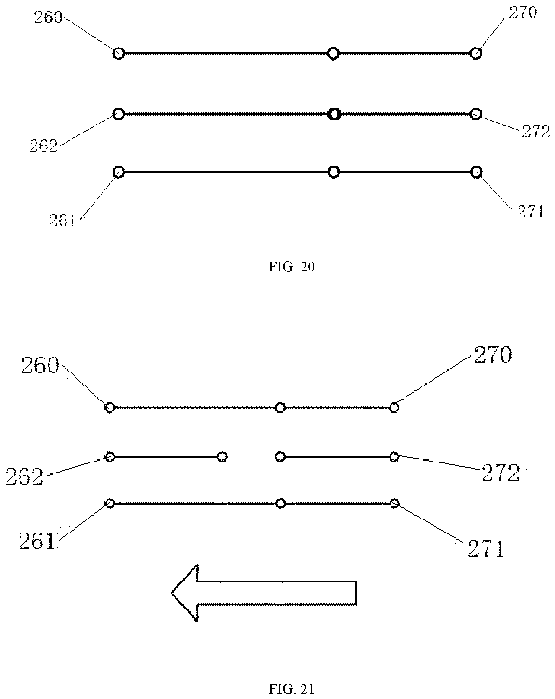

FIG. 21 is a schematic view when a first magnetic connection assembly and a second magnetic connection assembly get away from each other, and a detecting pin and a detecting stand are separated according to an embodiment of the present disclosure; and

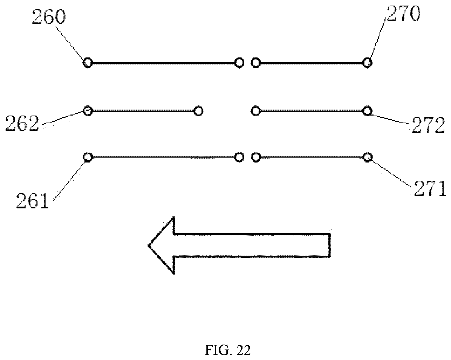

FIG. 22 is a schematic view when a first magnetic connection assembly and a second magnetic connection assembly get away from each other, and a positive charging pin and a positive charging stand, as well as a negative charging pin and a negative charging stand, are separated according to an embodiment of the present disclosure.

In the figures:

| | | | | | |
|---|---|---|---|---|---|
| 1: | Structural main body | 2: | Partition device | 3: | Power transmission assembly |
| 4: | Power element | 5: | Transmission element | 6: | End cover |
| 20: | Partition element | 21: | Sealing element | 30: | Telescopic element |
| 31: | Rotating element | 32: | Movable element | 50: | Second gear |
| 51: | Case | 52: | First gear | 100: | Sliding chute |
| 300: | Guiding element | 60: | Water discharge hole | 7: | First rotating element |
| 8: | Second rotating element | 9: | Flexible element | 10: | Spacer |

| | | | | | |
|---|---|---|---|---|---|
| 11: | Fixed seat | 12: | Third rotating element | 200: | Connecting portion |
| 13: | Cleaning drum | 14: | Apparatus body | 15: | Buoyancy adjusting structure |
| 16: | Controller | 17: | Wireless communication module | 18: | Wireless control terminal |
| 19: | Capacity detecting module | 20: | Position detecting module | 21: | Capacity detecting unit |
| 22: | Activity detecting unit | 23: | Energy assembly | 24: | Photovoltaic power generation unit |
| 25: | Water outlet | 26: | First magnetic connection assembly | 27: | Second magnetic connection assembly |
| 28: | Switch assembly | 29: | Detection control device | 33: | Cell |
| 260: | Positive charging pin | 261: | Negative charging pin | 262: | Detecting pin |
| 270: | Positive charging stand | 271: | Negative charging stand | 272: | Detecting stand |
| L: | Inductor | C: | Capacitor | R1: | First resistor |
| R2: | Second resistor | R3: | Third resistor | R4: | Fourth resistor |
| R5: | Fifth resistor | R6: | Sixth resistor | R7: | Sixth resistor |
| R7: | Seventh resistor | Q1: | First triode | Q2: | Second triode |
| Q3: | MOS transistor | D1: | First diode | D2: | Second diode |

### DETAILED DESCRIPTION OF THE EMBODIMENTS

The present disclosure is further described below with reference to the accompanying drawings and specific embodiments.

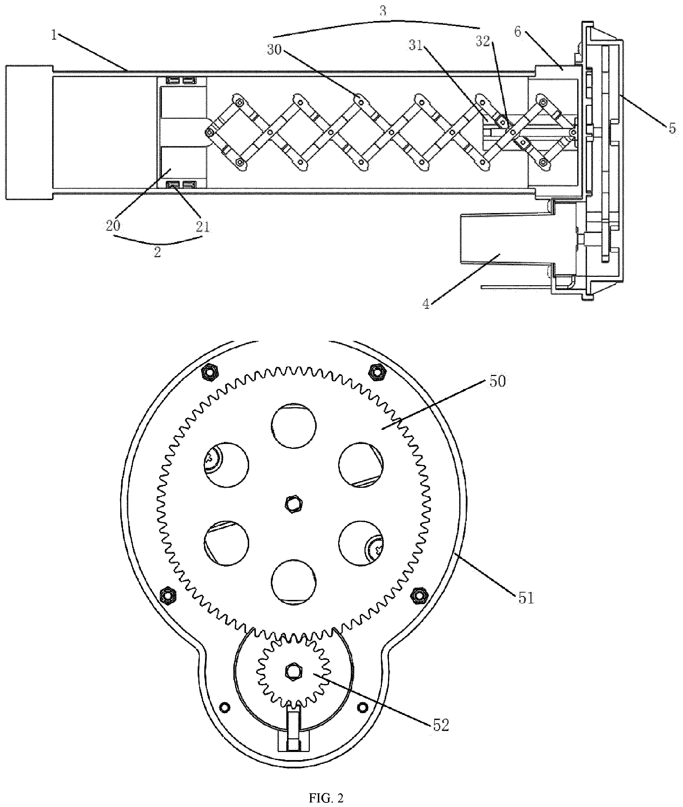

FIG. 1 illustrates a schematic structural view according to an embodiment of the present disclosure. The embodiment relates to a cleaning apparatus for a surface submerged in a liquid, which is used to clean a pond, a pool, etc. The cleaning apparatus for a surface submerged in a liquid includes a wireless charging module for wireless charging. A solar cell is provided to convert light energy into electric energy, and store the electric energy. This supplies power to the cleaning apparatus for a surface submerged in a liquid, and solves the problem that in case of severe weathers or overcasts or the like, the solar energy cannot produce the electric energy, and the device to be charged cannot be powered. A contact interface structure is provided. The contact interface structure is a magnetic interface structure, and can realize magnetic charging. The magnetic interface structure is provided with a detecting pin set and a detecting stand set corresponding to each other. The detecting stand set is connected to a detection control device and a switch assembly. In response to charging, a charging loop is turned on with a delay. In response to an outage (the charging is terminated), the charging loop is turned off in advance. Therefore, there is no charging in an unreliable connecting period (an earlier stage of charging insertion and a later period of outage separation). The detection control device detects whether the detecting pin set contacts the detecting stand set, and controls connection and disconnection of the switch assembly, thereby controlling on and off of the charging loop, and controlling whether a power source charges the cell of the underwater device. By use of a time difference between contact for a charging pin set and a charging stand set and contact for the detecting pin set and the detecting stand set, a reliable loop is formed. This reduces arc discharge, prolongs a service life of a charging pin and a charging stand, and is safe and reliable.

Moreover, in view of mutual attraction between opposite magnetic poles, a first magnetic connection assembly and a second magnetic connection assembly are centered, such that the charging pin set is aligned at the charging stand set, and the detecting pin set is aligned at the detecting stand set, to prevent a phenomenon that "the contact between the detecting pin set and the detecting stand set is earlier than the contact between the charging pin set and the charging stand set in the insertion" due to mutual inclination between the first magnetic connection assembly and the second magnetic connection assembly. With the accurate and reliable contact, reliable connection is formed to prevent a misjudgment (in the charging insertion, the contact between the detecting pin set and the detecting stand set is earlier than the contact between the charging pin set and the charging stand set. In the outage separation, separation between the detecting pin set and the detecting stand set is later than separation between the charging pin set and the charging stand set), thereby further reducing the arc discharge. The cleaning apparatus for a surface submerged in a liquid includes a buoyancy adjusting structure, such that the cleaning apparatus for a surface submerged in a liquid can automatically rise or sink. In response to charging, the cleaning apparatus for a surface submerged in a liquid automatically rises out of water, and moves to a wireless-charging transmitting terminal for wireless charging. Without being manually searched, the cleaning apparatus for a surface submerged in a liquid can automatically rise to search the wireless-charging transmitting terminal, and automatically sink, thereby improving a working efficiency.

A cleaning apparatus for a surface submerged in a liquid includes:
apparatus body 14;
a wireless charging module provided on the apparatus body 14, and configured to charge a cell in the apparatus body 14; and
an automatic rising-sinking structure, where through an operation of the automatic rising-sinking structure, the apparatus body 23 rises or sinks.

The automatic rising-sinking structure is buoyancy adjusting structure 15. By adjusting a buoyancy, the cleaning apparatus for a surface submerged in a liquid rises or sinks.

Alternatively, the automatic rising-sinking structure is constructed as follows: A pump does not work, and when submerged in a liquid, the cleaning apparatus for a surface submerged in a liquid rises due to a buoyancy greater than a gravity, until being partially exposed out of a liquid surface. The pump works, and the cleaning apparatus for a surface submerged in a liquid is pressed on a submerged surface through a pressure of a liquid produced when the pump works. The cleaning apparatus for a surface submerged in a liquid includes the pump configured to pump sewage in cleaning. The sewage enters a filter device in the cleaning apparatus, filtered, and discharged from a water outlet. When discharged, the filtered water produces a certain pressure to the cleaning apparatus. In some possible embodiments, a density of a material of each component in the cleaning apparatus is less than a density of the liquid. When the pump does not work, no pressure is applied to the cleaning apparatus, and the buoyancy of the cleaning apparatus on the submerged surface in the liquid is greater than the gravity. The cleaning apparatus automatically rises due to a force unbalance, until being partially exposed out of the liquid surface. By this time, the cleaning apparatus is floated on the liquid surface with a force balance for wireless charging. Upon completion of the charging, the pump works, and a pressure of the filtered liquid discharged from the water outlet is applied to the cleaning apparatus. By calculation, a work pumping pressure of the pump can be controlled, such that a sum of the pressure and the gravity is greater than the buoyancy, and the cleaning apparatus sinks into the submerged surface for cleaning.

Alternatively, the automatic rising-sinking structure is constructed as follows: A pump works at a first pumping pressure, and when submerged in a liquid, the cleaning apparatus for a surface submerged in a liquid rises due to a buoyancy greater than a gravity, until being partially exposed out of a liquid surface. The pump works at a second pumping pressure greater than the first pumping pressure, and the cleaning apparatus for a surface submerged in a liquid is pressed on a submerged surface through a pressure of a liquid produced when the pump works at the second pumping pressure. In some possible embodiments, a density of a material of each component in the cleaning apparatus is less than a density of the liquid. According to calculation, the pump can be controlled to work at the first pumping pressure. A first pressure is applied to the cleaning apparatus, such that a buoyancy of the cleaning apparatus on the submerged surface in the liquid is greater than a sum of the gravity and the first pressure, and the cleaning apparatus automatically rises due to a force unbalance, until being partially exposed out of the liquid surface. By this time, the cleaning apparatus is floated on the liquid surface with a force balance for wireless charging. Upon completion of the charging, the pump works. According to calculation, the pump can be controlled to work at the second pumping pressure. A second pressure is applied to the cleaning apparatus, such that a sum of the second pressure and the gravity is greater than a buoyancy, and the cleaning apparatus sinks into the submerged surface for cleaning.

The cleaning apparatus for a surface submerged in a liquid may be applied to cleaning a pool. A charging station may be located at a bank of the pool.

Alternatively, the charging station may be provided on a wall of the pool. In a height direction, the charging station is located at any one of following positions on the wall of the pool:
a position between a bottom of the pool and a pool water surface, namely, the charging station may be provided at any position of the wall of the pool between the bottom of the pool and the pool water surface;
a position near the pool water surface, namely, the charging station may be provided at a position of the wall of the pool near the pool water surface, for example, in response to the calm pool water surface, with the pool water surface as a reference, the charging station is provided on the wall of the pool within 5-10 cm above the pool water surface, and within 5-10 cm below the pool water surface; and
a position above the pool water surface, namely, the charging station is provided on the wall of the pool above the pool water surface.

Alternatively, the charging station is floated on a pool water surface.

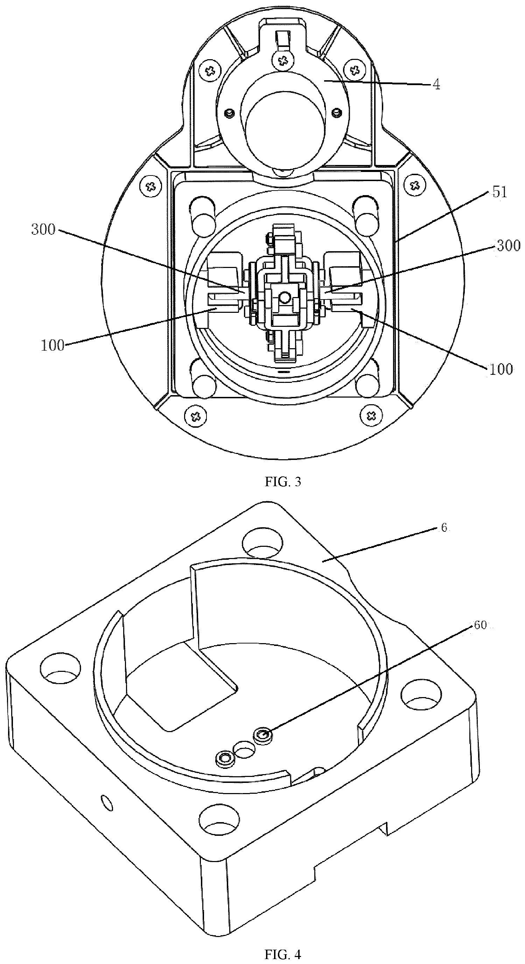

As shown in FIG. 1 to FIG. 6, the buoyancy adjusting structure 15 includes structural main body 1 with an opening at an end, partition device 2 provided in the structural main body 1, and a power device for driving the partition device 2 to move. The partition device 2 partitions an internal space of the structural main body 1 to form an airtight space. The partition device 2 moves relative to the structural main body 1. The buoyancy in water is adjusted by changing a volume of the airtight space, such that the apparatus body 14 rises and sinks, and the cleaning apparatus for a surface submerged in a liquid automatically rises and sinks, without being manually searched. Specifically, the partition device 2 is provided along a radial direction of the structural main body 1, to separate the internal space of the structural main body 1. The partition device 2 contacts an inner wall of the structural main body 1. One side of the partition device 2 is designed into the airtight space. The partition device 2 moves along an axial direction of the structural main body 1. By changing the volume of the airtight space, a buoyancy of the buoyancy adjusting structure 15 in the water is controlled for rising or sinking.

The structural main body 1 is a cylindrical structure with one end closed and the other end open. The open end of the structural main body 1 is provided with end cover 6. An accommodation space is formed in the structural main body 1, so as to mount the partition device 2 in the accommodation space conveniently, and mount the power device conveniently. A cross section of the structural main body 1 may be circular, square or elliptical or the like. The cross section of the structural main body is selected according to an actual need, and is not specifically demanded herein.

In order to mount the power device conveniently, spacer 10 is provided in the structural main body 1. The spacer 10 is provided along the radial direction of the structural main body 1. Whether the spacer 10 is provided is selected according to a structure of the power device and the whole buoyancy adjusting structure 15.

The partition device 2 can separate the accommodation space in the structural main body 1 into at least two spaces. The airtight space is formed between the partition device 2 and the closed end of the structural main body 1. Alternatively, the airtight space is formed between the partition device 2 and the spacer 10. The airtight space is selected and provided according to a structure and a mounting manner of the power device.

Specifically, a shape of the partition device 2 matches with a shape of the internal space of the structural main body 1. The partition device 2 under the power device can move along the axial direction of the structural main body 1. The partition device 2 in motion always contacts the inner wall of the structural main body 1 at a clearance fit, such that the airtight space at one side of the partition device 2 always keeps an airtight state in the motion of the partition device 2. When the buoyancy adjusting structure 15 is located in the water, the water cannot enter the airtight space. This ensures that the volume of the airtight space is changed through the motion of the partition device 2, and a content in the airtight space is compressed or expanded.

The partition device 2 makes a linear motion along the axial direction of the structural main body 1. In the embodiment, preferably, the partition device 2 makes a linear reciprocating motion to change the volume of the airtight space.

In the embodiment, preferably, the cross section of the structural main body 1 is circular. Accordingly, a cross section of the partition device 2 is also circular. The partition device 2 has a certain thickness. The thickness is selected according to an actual need, and is not specifically demanded herein.

As shown in FIG. 1 to FIG. 4, the partition device 2 includes partition element 20 and sealing element 21 provided at a periphery of the partition element 20. The partition element 20 contacts an inner wall of the structural main body 1. The sealing element 21 seals a contact position between the partition element 20 and the structural main body 1. The shape of the partition element 20 matches with the shape of the cross section of the structural main body 1. The partition element 20 in motion always contacts the inner wall of the structural main body 1. The partition element 20 is in clearance fit with the structural main body 1. The sealing element 21 is provided at the periphery of the partition element 20, thus further sealing the contact position between the partition element 20 and the inner wall of the structural main body 1. There is at least one sealing element 21. A number of the sealing elements 21 is selected according to an actual need, and is not specifically demanded herein. The sealing element 21 is made of an elastic material. A groove is formed at a side of the periphery of the partition element 20. The sealing element 21 is sleeved on an outer surface of the partition element 20, located in the groove, and protruded out of the groove. Preferably, in the embodiment, the sealing element 21 is a sealing ring, and is preferably a Y-shaped sealing ring.

The power device includes a power assembly and power transmission assembly 3 connected to the power assembly. The power assembly drives the power transmission assembly 3 to operate, thereby driving the partition device 2 to make a linear motion. The power assembly outputs power. The power transmission assembly 3 transmits the power. The power transmission assembly 3 is a structure capable of realizing the linear reciprocating motion of the partition device 2, and is selected and provided according to an actual need.

The power assembly is provided outside the structural main body 1. Alternatively, the power assembly is provided in a space formed between the spacer 10 and the closed end of the structural main body 1. The power assembly is selected and provided according to an actual structure of the power assembly and the whole buoyancy adjusting structure 15.

One structure of the power transmission assembly 3 is as follows: As shown in FIG. 1, the power transmission assembly 3 includes rotating element 31, movable element 32 provided on the rotating element 31 and configured to move relative to the rotating element 31, and telescopic element 30 connected to the movable element 32. One end of the telescopic element 30 is connected to the partition device 2. The rotating element 31 drives the movable element 32 to move, such that the telescopic element 30 is lengthened or shortened to drive the partition device 2 to move. The power transmission assembly 3 is located in the structural main body 1, and located in a space between the partition device 2 and the open end of the structural main body 1. The end cover 6 is fastened at the open end of the structural main body 1. The end cover 6 is provided with a through hole. One end of the rotating element 31 is connected to the power assembly via the through hole in the end cover 6. The rotating element 31 can rotate relative to the end cover 6. The rotating element 31 is provided on the end cover 6 through a shaft retaining ring, such that the rotating element 31 can rotate relative to the end cover 6, and cannot move axially. The movable element 32 is provided on the rotating element 31. The movable element 32 can make a linear reciprocating motion along a length direction of the rotating element 31, such that the telescopic element 30 is driven to make a linear reciprocating motion, and the telescopic element 30 is shortened or lengthened. The movable element 32 is in threaded connection with the rotating element 31. Through rotation of the rotating element 31, the linear motion of the movable element 32 is realized. In the embodiment, the rotating element 31 is preferably a lead screw, and the movable element 32 is a lead screw nut.

The telescopic element 30 includes one end hinged to an end surface of the partition element 20 close to the rotating element 31, and the other end hinged to the movable element 32. Alternatively, the other end of the telescopic element 30 is hinged to the end cover 6. In this case, a position between two ends of the telescopic element 30 is hinged to the movable element 32. Through a motion of the movable element 32, the telescopic element 30 is shortened or lengthened to move the partition element 20. In the embodiment, preferably, the telescopic element 30 is a four-rod structure, and includes a plurality of hinged connecting rods. Through a swing of two connecting rods connected to the movable element 32, the whole four-rod structure is lengthened and shortened.

There is at least one telescopic element 30. When there are a plurality of telescopic elements 30, the plurality of telescopic elements 30 are arranged along a circumferential direction of the rotating element 31, and are connected to the movable element 32, such that the plurality of telescopic elements 30 operate at the same time. Preferably, in the embodiment, there are two telescopic elements 30. The two telescopic elements 30 are respectively provided at two sides of the rotating element 31.

In order to prevent rotation of the telescopic element 30, guiding element 300 is provided on the telescopic element 30. Sliding chute 100 is formed at a corresponding position on the inner wall of the structural main body 1. The guiding element 300 is inserted into the sliding chute 100 and slides along the sliding chute 100, thereby ensuring the telescopic element 30 to make the linear motion. The guiding element 300 is a cylindrical structure. The guiding element 300 is provided at a side of the telescopic element 30 close to the inner wall of the structural main body 1. The sliding chute 100 is provided along a length direction of the structural main body 1. The sliding chute 100 is fixedly connected to the inner wall of the structural main body 1, and preferably integrally formed with the inner wall of the structural main body. The guiding element 300 includes one end fixedly connected to the telescopic element 30, and the other end inserted into the sliding chute 100, and sliding along the sliding chute 100 to guide a motion of the guiding element 300.

The power assembly includes power element 4 and transmission element 5 connected to the power element 4. The transmission element 5 is connected to the rotating element 31, and configured to drive the rotating element 31 to rotate. The power element 4 is preferably a motor. The transmission element 5 is preferably a decelerator. The decelerator includes case 51, as well as first gear 52 and second gear 50 that are rotatably provided in the case 51. The first gear 52 is engaged with the second gear 50. The first gear 52 is connected to the motor. The second gear 50 is connected to the rotating element 31. Through rotation of the motor, the first gear 52 is driven to rotate. Therefore, the second gear 50 rotates, to realize the rotation of the rotating element 31. The motor is fixedly connected to the case 51. The case 51 is connected to the end cover 6. The motor and the decelerator are provided on the end cover 6, and rotate with the structural main body 1.

For ease of water discharge, the end cover 6 is provided with water discharge hole 60.

According to this structure of the power transmission assembly 3, in response to power transmission, the motor rotates, with a torque transmitted to the rotating element 31 through the first gear 52 and the second gear 50. The rotating element 31 rotates to drive the movable element 32 to move along the length direction of the rotating element 31. The telescopic element 30 is lengthened with a motion of the movable element 32. The partition device 2 is pulled to move toward the end cover 6, and the airtight space has a larger volume. Through a motion of the partition device 2, water in a space between the partition device 2 and the end cover 6 is discharged from the water discharge hole 60 in the end cover 6. The buoyancy adjusting structure 15 suffers from a weight loss and a force unbalance. A buoyancy of the buoyancy adjusting structure 15 in the water increases. Under the buoyancy, the buoyancy adjusting structure 15 automatically rises out of the water surface. When the buoyancy adjusting structure 15 sinks, the motor rotates reversely. Through transmission of the first gear 52 and the second gear 50, the rotating element 31 rotates reversely. The movable element 32 moves reversely. The telescopic element 30 is shortened to push the partition device 2 to move. The airtight space has a smaller volume. The buoyancy adjusting structure 15 has a smaller buoyancy in the water, and sinks.

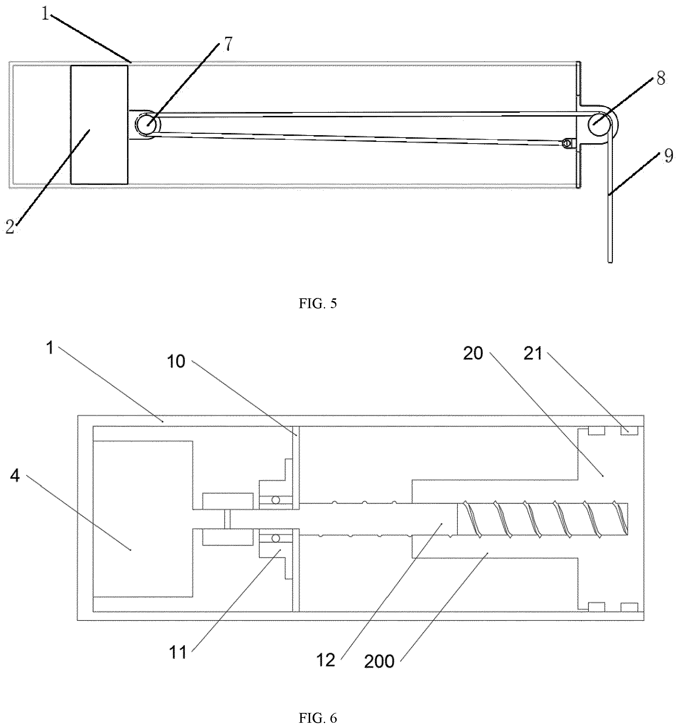

Another structure of the power transmission assembly 3 is as follows: As shown in FIG. 5, the power transmission assembly 3 includes first rotating element 7, second rotating element 8, and flexible element 9 wound on the first rotating element 7 and the second rotating element 8. The first rotating element 7 is rotatably connected to the partition device 2. The second rotating element 8 is rotatably connected to the end cover 6 of the structural main body 1. One end of the flexible element 9 is connected to the end cover 6 of the structural main body 1, and the other end of the flexible element 9 is connected to the power assembly. The power assembly drives the flexible element 9 to operate, such that the first rotating element 7 and the second rotating element 8 rotate to drive the partition device 2 to make a linear reciprocating motion. In the embodiment, the power transmission assembly 3 is located in the structural main body 1, and located in a space between the partition device 2 and the end cover 6. The first rotating element 7 is rotatably provided on an end surface of the partition element 20 close to the end cover 6 through a rotating shaft. The second rotating element 8 is rotatably provided on an end surface of the end cover 6 close to the internal space of the structural main body 1 through a rotating shaft. Meanwhile, a fastener is fixedly provided on the end surface of the end cover 6. The flexible element 9 includes one end fixedly connected to the fastener. The other end of the flexible element 9 sequentially passes through the first rotating element 7 and the second rotating element 8, extends out of the end cover 6, and is wound on the first rotating element 7 and the second rotating element 8. The other end of the flexible element 9 is connected to the power assembly. The power assembly is fixedly connected to the end cover 6.

In the embodiment, the first rotating element 7 and the second rotating element 8 are preferably a pulley. The flexible element 9 is a rope, a chain or a steel rope. The first rotating element 7, the second rotating element 8, and the flexible element 9 form a pulley set structure.

In the embodiment, the power assembly may only include the power element 4. The power element 4 is preferably a motor. In response to rotation of a motor shaft, one end of the flexible element 9 is wound on the motor shaft (the motor shaft may also be provided with a connecting piece for winding the flexible element 9). A tensile force is applied to the flexible element 9, thereby pulling the partition device 2 to move.

In an initial state, the partition device 2 is located at the closed end of the structural main body 1. When the buoyancy adjusting structure 15 rises, the motor rotates, and the flexible element 9 is wound on an output shaft of the motor. By applying a tensile force to the flexible element 9, the first rotating element 7 and the second rotating element 8 rotate, the partition device 2 is pulled to move toward the end cover 6, and the airtight space has a larger volume. Through a motion of the partition device 2, water in the space between the partition device 2 and the end cover 6 is discharged from the water discharge hole 60 in the end cover 6. The buoyancy adjusting structure 15 suffers from a weight loss. The buoyancy adjusting structure 15 has a larger buoyancy in the water. Under the buoyancy, the buoyancy adjusting structure 15 automatically rises out of the water surface. The motor with a brake function can be stopped at any position. The buoyancy adjusting structure 15 is lifted out of the pool. When the buoyancy adjusting structure 15 sinks, the motor rotates reversely, the flexible element 9 is loosened, and the partition device 2 automatically moves toward a reverse direction (the closed end of the structural main body 1) under a negative pressure in the airtight space. The airtight space has a smaller volume. Water enters the space between the partition device 2 and the end cover 6, and also enters the buoyancy adjusting structure 15. The buoyancy adjusting structure 15 has a smaller buoyancy, and the buoyancy adjusting structure 15 sinks.

A third structure of the power transmission assembly 3 is as follows: As shown in FIG. 6, the power transmission assembly 3 includes third rotating element 12 rotatably connected to the structural main body 1. One end of the third rotating element 12 is rotatably connected to the partition device 2, and the other end of the third rotating element 12 is connected to the power assembly. The third rotating element 12 rotates to drive the partition device 2 to move. In the embodiment, spacer 10 is provided in the structural main body 1. The spacer 10 is a platy structure, and is fixedly connected to the inner wall of the structural main body 1. The spacer 10 and the closed end of the structural main body 1 form a mounting space, such that the power assembly is provided in the mounting space conveniently. The power transmission assembly 3 is provided in a space at the other side of the spacer 10, such that the power transmission assembly 3 can also be provided in the structural main body 1.

In the embodiment, an end surface of the partition element 20 close to the spacer 10 is convexly provided with connecting portion 200. A through hole is formed in the spacer 10. One end of the third rotating element 12 is connected to the power assembly via the through hole. Fixed seat 11 is fixedly provided at a side of the spacer 10 close to the closed end of the structural main body 1. The end of the third rotating element 12 is rotatably connected to the fixed seat 11 through a bearing. The other end of the third rotating element 12 is connected to the connecting portion 200 of the partition element 20. The third rotating element 12 can rotate relative to the spacer 10. Through rotation of the third rotating element 12, the partition element 20 makes a linear motion along an axis of the structural main body 1. The third rotating element 12 is preferably a lead screw. The connecting portion 200 is provided with a threaded hole. The third rotating element 12 is in threaded connection with the connecting portion 200.

A space between the partition element 20 and the spacer 10 serves as the airtight space. Through the linear reciprocating motion of the partition element 20, the volume of the airtight space changes, thereby changing the buoyancy of the buoyancy adjusting structure 15.

In the embodiment, the power assembly may only include the power element 4. The power element 4 is a motor. An output shaft of the motor is connected to the third rotating element 12 through a shaft coupling.

In the embodiment, when the buoyancy adjusting structure 15 rises, the motor rotates, the third rotating element 12 is driven to rotate, and the partition device 2 moves along the axis of the structural main body 1. The partition device 2 moves toward the end cover 6 of the structural main body 1. Water in the space between the partition device 2 and the end cover 6 is discharged from the water discharge hole 60 of the end cover 6. The buoyancy adjusting structure 15 suffers from a weight loss. The buoyancy adjusting structure 15 has a larger buoyancy in the water. Under the buoyancy, the buoyancy adjusting structure 15 automatically rises out of the water surface. When the buoyancy adjusting structure 15 sinks, the motor rotates reversely, the third rotating element 12 is driven to rotate reversely, and the partition device 2 moves toward the spacer 10. The airtight space has a smaller volume. The buoyancy adjusting structure 15 has a smaller buoyancy, and the buoyancy adjusting structure 15 sinks.

The buoyancy adjusting structure 15 is provided in cleaning drum 13 of the cleaning apparatus for a surface submerged in a liquid. In this case, the cleaning drum 13 can replace the structural main body 1. Alternatively, the structural main body 1 is retained, and provided according to an actual need. By changing the volume of the airtight space, the content in the airtight space is compressed or expanded, the gravity of the cleaning apparatus for a surface submerged in a liquid is changed, and the buoyancy of the cleaning apparatus for a surface submerged in a liquid in the water is changed. The cleaning apparatus for a surface submerged in a liquid can automatically rises out of the water surface after stopping working.

The buoyancy adjusting structure 15 can be located in any cleaning drum 13 of the cleaning apparatus for a surface submerged in a liquid. Alternatively, the buoyancy adjusting structure 15 can be located in all cleaning drums 13 of the cleaning apparatus for a surface submerged in a liquid. Alternatively, the buoyancy adjusting structure 15 is located in two cleaning drums 13 corresponding to a front and a rear of the cleaning apparatus for a surface submerged in a liquid. Alternatively, the buoyancy adjusting structure is provided in other manners. The other manners are selected according to an actual need, and are not specifically demanded herein.

The cleaning drum 13 is a cylindrical structure with one end closed and the other end open. The open end of the cleaning drum 13 is provided with a cleaning end cover (the cleaning end cover can replace the end cover 6 on the structural main body 1. The structural main body 1 fastened with the end cover 6 can be the cleaning drum 13 fastened with the cleaning end cover). The cleaning end cover is also provided with a water discharge hole. A plurality of brush strips are provided on an outer surface of the cleaning drum 13. Through rotation of the cleaning drum 13, the plurality of brush strips brush the bottom and the wall of the pool. An accommodation space is formed in the cleaning drum 13. The buoyancy adjusting structure 15 can be provided in the accommodation space.

As a further optimized solution, the cleaning apparatus for a surface submerged in a liquid further includes controller 16. The controller 16 is electrically connected to the buoyancy adjusting structure 15, and configured to control the buoyancy adjusting structure 15. The controller 16 is provided in a sealing box of the cleaning apparatus for a surface submerged in a liquid, electrically connected to the power assembly of the buoyancy adjusting structure 15, and configured to control the power assembly, thereby controlling the partition device 2.

In the above description, the power device is mechanically connected to the partition device 2 through the power transmission assembly 3. The power transmission assembly 3 may further be a crank slider structure or a worm gear structure, or a combination of a plurality of structures, or other structures capable of driving the partition device 2 to make the linear motion. By converting rotation of the power device into the linear motion, the partition device 2 is driven to make the linear reciprocating motion.

In addition, the power device may also be non-mechanically connected to the partition device 2. The partition device 2 may be controlled with a magnetic force. For example, one end of the structural main body 1 is provided with an electromagnet. A permanent magnet is provided on the partition device 2 or the whole partition element 20 is a permanent magnet. By changing magnetic poles of the electromagnet, the partition device 2 gets close to or away from the electromagnet relatively, and the partition device 2 makes the linear reciprocating motion along the axis of the structural main body 1. By changing the volume of the airtight space, the buoyancy adjusting structure 15 (the cleaning apparatus for a surface submerged in a liquid) rises and sinks. Alternatively, the partition device 2 is driven by thermal expansion of a gas. For example, a heating resistance wire is provided in the airtight space between the partition device 2 and the closed end of the structural main body 1. The heating resistance wire heats air, such that the air is thermally expanded to push the partition device 2 to move. By cooling the air, the airtight space has a smaller pressure, and the partition device 2 moves reversely. Alternatively, water and other liquids or solids are filled in the airtight space, and heated for gasification or sublimation, thereby pushing the partition device 2 to move, and realizing the linear reciprocating motion of the partition device 2 along the axis of the structural main body 1. By changing the volume of the airtight space, the buoyancy adjusting structure 15 (the cleaning apparatus for a surface submerged in a liquid) rises. When the buoyancy adjusting structure sinks, the resistance wire is not heated. A gas in the airtight space is cooled with water in the pool and is liquefied or condensed. The airtight space has a smaller pressure, and the partition device 2 moves and restores to an original position, such that the buoyancy adjusting structure 15 (the cleaning apparatus for a surface submerged in a liquid) sinks. Alternatively, the partition device is controlled in other manners. The other manners are selected according to an actual need, and are not specifically demanded herein.

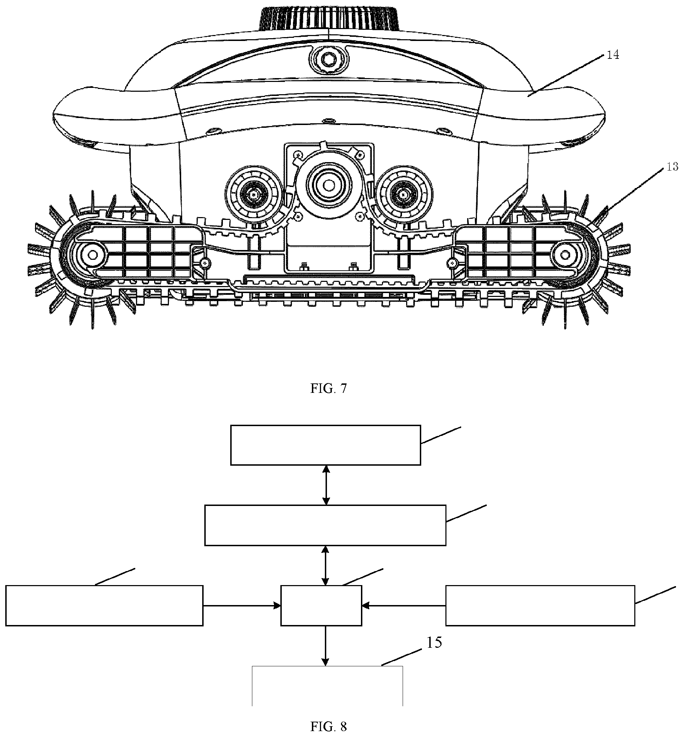

As shown in FIG. 7, the cleaning apparatus for a surface submerged in a liquid includes a mounting housing. A water inlet and a water outlet are formed in the mounting housing. A filter module is provided in the mounting housing to filter sucked sewage. Filtered water is discharged from the water outlet. The cleaning apparatus for a surface submerged in a liquid includes a drive module and a traveling module. The controller 16 controls the drive module, thereby driving the traveling module to travel. The drive module and the traveling module are a prior structure, and are not specifically described herein.

As shown in FIG. 8, the wireless charging module includes a receiving terminal. The receiving terminal is connected to the cell in the apparatus body 14. The receiving terminal is a receiving coil. The receiving coil is connected to the cell through a control circuit. The control circuit includes a rectifier circuit, a filter circuit, etc. The control circuit is a circuit structure of an existing wireless-charging receiving terminal. The circuit structure is selected according to an actual need, and is not specifically demanded herein.

Connected to a power source, a wireless-charging transmitting terminal can be floated on the water surface, or provided on the bank of the pool. When to be charged, the cleaning apparatus for a surface submerged in a liquid can rise to the water surface to search the wireless-charging transmitting terminal, and get close to the transmitting terminal, until the wireless-charging receiving terminal corresponds to the transmitting terminal for energy transmission, thereby charging the cell in the apparatus body 14.

In some possible embodiments, in order that the cleaning apparatus for a surface submerged in a liquid can quickly search the wireless-charging transmitting terminal, the cleaning apparatus for a surface submerged in a liquid further includes position detecting module 20. The position detecting module 20 is connected to controller 16 in the apparatus body 14. The position detecting module 20 detects a position of the wireless-charging transmitting terminal. The controller 16 controls the apparatus body 14 to travel, such that the cleaning apparatus for a surface submerged in a liquid gets close to the wireless-charging transmitting terminal. The position detecting module 20 may be one or more of an infrared sensor, a visual sensor, an ultrasonic sensor, and a radar sensor.

In some possible embodiments, the cleaning apparatus for a surface submerged in a liquid further includes capacity detecting module 19. The capacity detecting module 19 is connected to the controller 16 and the cell in the apparatus body 14, and configured to detect a remaining capacity of the cell and send the remaining capacity to the controller 16. In this case, the controller 16 is configured as follows:
The capacity detecting module 19 monitors a capacity of the cell, and sends a monitored result to the controller 16. According to the received remaining capacity, the controller 16 is configured to:
send a rising instruction to the power device, such that the power device drives the partition device 2 to move, the airtight space increases and the apparatus body 14 rises; and
send a sinking instruction to the power device, such that the power device drives the partition device 2 to move, the airtight space decreases and the apparatus body 14 sinks.

The capacity detecting module 19 is an electronic component for detecting the capacity of the cell, and is a commercially available product. The capacity detecting module is selected according to an actual need, and is not specifically demanded.

In some possible embodiments, the cleaning apparatus for a surface submerged in a liquid further includes wireless control terminal 18 and wireless communication module 17. The controller 16 in the apparatus body 14 communicates with the wireless control terminal 18 through the wireless communication module 17. The controller 16 sends information to the wireless control terminal 18 through the wireless communication module 17, feeds back an operating state of the cleaning apparatus for a surface submerged in a liquid, and receives information from the wireless control terminal 18 through the wireless communication module 17 for adjustment.

The wireless communication module 17 includes at least one of a WiFi communication module, a Bluetooth communication module, a 4G module, a 5G module, or a GPRS module. The wireless communication module is selected according to an actual need, and is not specifically demanded. The wireless control terminal 18 is a mobile device, such as a mobile phone, a computer, and a pad.

In this case, the wireless control terminal 18 may be configured as follows:
The controller 16 sends the remaining capacity of the cell to the wireless control terminal 18 through the wireless communication module 17. The wireless control terminal 18 receives the remaining capacity from the controller 16 and outputs a user-perceptive remaining capacity prompt, for example, displays time that can be used by the remaining capacity, the remaining capacity or a percentage of the remaining capacity.

The wireless control terminal 18 sends a manual rising instruction and a manual sinking instruction to the controller 16 through the wireless communication module 17 based on a user input.

The controller 16 may further be configured to:
send the rising instruction to the power device based on the received manual rising instruction; and
send the sinking instruction to the power device based on the received manual sinking instruction.

According to the remaining capacity, whether the cleaning apparatus for a surface submerged in a liquid rises for charging is determined by the user. If so, the rising instruction is input. The wireless control terminal 18 sends the rising instruction to the controller 16 through the wireless communication module 17. Upon reception of the rising instruction, the controller 16 controls the power device, such that the power device drives the partition device 2 to move, the airtight space increases and the apparatus body 14 rises.

After the cleaning apparatus rises to the water surface, the position detecting module 20 detects a position of the wireless-charging transmitting terminal, and sends a detected position to the controller 16. The controller 16 controls the apparatus body 14 to travel toward the wireless-charging transmitting terminal and get close to the wireless-charging transmitting terminal, such that the wireless-charging transmitting terminal corresponds to the receiving terminal on the apparatus body 14 for wireless charging.

After the cell is fully charged or meets a use requirement, the wireless control terminal 18 sends the sinking instruction to the controller 16 through the wireless communication module 17. Upon reception of the sinking instruction, the controller controls the power device, such that the power device drives the partition device 2 to move, the airtight space decreases, and the apparatus body 14 sinks.

In some possible embodiments, the controller 16 is configured to:
allow, if a percentage of the remaining capacity is ≥M%, the cleaning apparatus for a surface submerged in a liquid to sink; and
allow, if the percentage of the remaining capacity is ≤N%, M>N, the cleaning apparatus for a surface submerged in a liquid to rise.

Upon reception of monitoring information on the remaining capacity of the cell, the controller 16 compares received percentage information of the remaining capacity with a preset sinking standard value M% of the remaining capacity and a preset rising standard value N% of the remaining capacity. If the percentage of the remaining capacity is ≥M%, the controller 16 controls the power device, such that the power device drives the partition device 2 to move, the airtight space decreases and the apparatus body 14 sinks. If the percentage of the remaining capacity is ≤N%, the controller 16 controls the power device, such that the power device drives the partition device 2 to move, the airtight space increases and the apparatus body 14 rises. M is 85-90, and N is 10-15. The M and the N are selected according to an actual need.

When the cleaning apparatus for a surface submerged in a liquid works, an impeller rotates to pump sewage in brushing of the cleaning drum 13. The sewage enters the filter module for filtration. Filtered clean water is discharged from the water outlet. The controller 16 controls the drive module, thereby driving the traveling module to travel. Under the gravity of the cleaning apparatus for a surface submerged in a liquid and a pressure provided by discharged water, the cleaning apparatus for a surface submerged in a liquid travels at the bottom and the wall of the pool, and the cleaning drum 13 brushes the bottom and the wall of the pool.

When the capacity detecting module 19 detects that the percentage of the remaining capacity of the cell in the apparatus body 14 is less than N%, for example, the percentage of the remaining capacity of the cell is less than 10%, the controller 16 controls the cleaning apparatus for a surface submerged in a liquid to stop working, and sends the percentage of the remaining capacity of the cell to the wireless control terminal 18 through the wireless communication module 17. The rising instruction is input by the user from the wireless control terminal 18. Through the wireless communication module 17, the controller 16 receives the rising instruction. The controller 16 controls the buoyancy adjusting structure 15 to adjust a buoyancy of the cleaning apparatus for a surface submerged in a liquid. The power assembly operates (the motor rotates or the motor and the decelerator rotate), thereby driving the power transmission assembly 3. The power transmission assembly 3 performs power transmission, and converts rotation of the power assembly into a linear motion, thereby driving the partition device 2 to make a linear reciprocating motion, increasing the volume of the airtight space, and discharging the water between the partition device 2 and the end cover 6. The cleaning apparatus for a surface submerged in a liquid suffers from a weight loss, a force unbalance, and the greater buoyancy. The cleaning apparatus for a surface submerged in a liquid automatically rises.

After the cleaning apparatus rises out of the water surface, the position detecting module 20 detects a position of the wireless-charging transmitting terminal, and sends the detected position to the controller 16. The controller 16 controls the underwater cleaner to travel close to the wireless-charging transmitting terminal, until the wireless-charging transmitting terminal corresponds to the receiving terminal of the wireless charging module for energy transmission and cell charging.

When the percentage of the remaining capacity of the cell is greater than M%, for example, the percentage of the remaining capacity is greater than 90%, and the pool is to be cleaned, the sinking instruction is input by the user from the wireless control terminal 18. Through the wireless communication module 17, the controller 16 receives the sinking instruction. The controller 16 controls the buoyancy adjusting structure 15 to adjust a buoyancy of the cleaning apparatus for a surface submerged in a liquid. The power assembly rotates reversely. The power transmission assembly 3 performs power transmission, and converts rotation of the power assembly into a linear motion, thereby driving the partition device 2 to move reversely, and decreasing the volume of the airtight space. With the greater weight and the smaller buoyancy, the cleaning apparatus for a surface submerged in a liquid sinks for underwater cleaning.

The cleaning apparatus for a surface submerged in a liquid further includes energy assembly 23. The energy assembly 23 includes photovoltaic power generation unit 24 and an energy storage module. The photovoltaic power generation unit 24 supplies power to the apparatus body 14. Alternatively, the photovoltaic power generation unit 24 supplies power to the apparatus body 14 through the energy storage module.

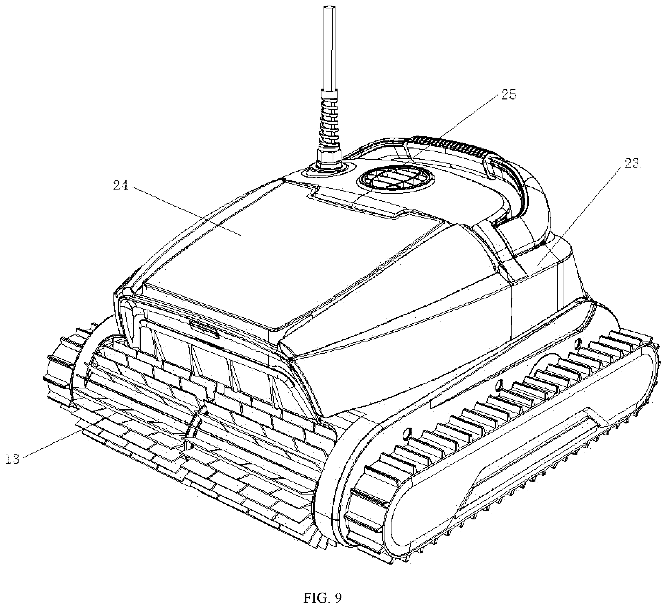

As shown in FIG. 9, the apparatus body 14 further includes a filter box provided on a path of a water channel, so as to intercept dirt in water flowing through the water channel. A filter chamber for accommodating the filter box is formed in the apparatus body 14. The apparatus body 14 includes a mounting housing. A water inlet and water outlet 25 are formed in the mounting housing. The filter chamber is provided in the mounting housing. The filter box is provided in the filter chamber. The filter box filters sucked sewage. Filtered water is discharged from the water outlet. An opening for allowing the filter box to get in and out is formed in an upper wall, a bottom wall or a circumferential wall of the filter chamber. A position of the opening is selected according to an actual need. In the embodiment, preferably, the opening is formed in the upper wall of the filter chamber, namely an upper wall of the mounting housing. The upper wall is an upward wall of the apparatus body 14 in the floated state. The apparatus body 14 further includes a cover plate configured to cover the opening in an openable and closable manner. The cover plate is rotatably connected to the opening. The cover plate covers the opening, and seals the filter box in the mounting housing. Meanwhile, when the cover plate is opened, the filter box can be taken out from the mounting housing.

The cleaning apparatus for a surface submerged in a liquid further includes a drive module and a traveling module. The controller 16 controls the drive module, thereby driving the traveling module to travel. The drive module and the traveling module are a prior structure, and are not specifically described herein.

The energy assembly 23 is provided on the apparatus body 14, and rises or sinks synchronously with the apparatus body 14. In the embodiment, the energy assembly 23 may be provided on a housing of the apparatus body 14, such that the photovoltaic power generation unit 24 can receive sunlight. The energy assembly 23 may also be provided in the apparatus body 14. Nevertheless, in order that the photovoltaic power generation unit 24 can receive the sunlight, a portion of the housing of the apparatus body 14 corresponding to the energy assembly 23 is made of a transparent material. The energy assembly 23 is selected and provided according to an actual need, and is not specifically demanded herein.

In some possible embodiments, the photovoltaic power generation unit 24 is located on an upper surface of the apparatus body 14. The upper surface is an upward surface of the apparatus body 14 in the floated state, such that the photovoltaic power generation unit receives the sunlight. Preferably, the photovoltaic power generation unit 24 is arranged along a surface of the cover plate away from the opening. That is, the photovoltaic power generation unit 24 is located on an upper surface of the cover plate.

The energy assembly 23 is a solar cell. The photovoltaic power generation unit 24 is a solar panel. The energy storage device is an energy storage cell connected to the solar panel, and stores electric energy into which solar energy is converted.

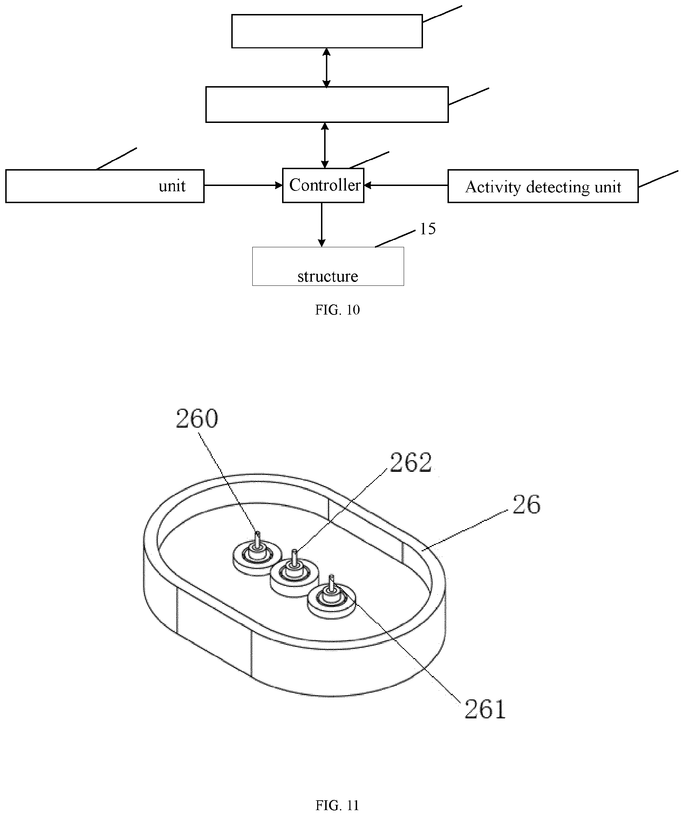

In some possible embodiments, as shown in FIG. 10, the cleaning apparatus for a surface submerged in a liquid further includes capacity detecting unit 21. The capacity detecting unit 21 is connected to the energy storage device and controller 16, and configured to detect a remaining capacity of the energy storage module and send the remaining capacity to the controller 16. In this case, the controller 16 is configured as follows:
The capacity detecting unit 21 monitors a capacity of the energy storage module, and sends a monitored result to the controller 16 in real time.

According to the received remaining capacity, the controller 16 is configured to:
send a rising instruction to the power device, such that the power device drives the partition device 2 to move, the airtight space increases and the apparatus body 14 rises; and
send a sinking instruction to the power device, such that the power device drives the partition device 2 to move, the airtight space decreases and the apparatus body 14 sinks.

The capacity detecting unit 21 is an electronic component for detecting the capacity of the cell, and is a commercially available product. The capacity detecting unit is selected according to an actual need, and this is not specifically demanded.

In some possible embodiments, the cleaning apparatus for a surface submerged in a liquid further includes wireless control terminal 18 and wireless communication module 17. The controller 16 in the apparatus body 14 communicates with the wireless control terminal 18 through the wireless communication module 17. The controller 16 sends information to the wireless control terminal 18 through the wireless communication module 17, feeds back an operating state of the cleaning apparatus for a surface submerged in a liquid, and receives information from the wireless control terminal 18 through the wireless communication module for adjustment.

The wireless communication module 17 includes at least one of a WiFi communication module, a Bluetooth communication module, a 4G module, a 5G module, or a GPRS module. The wireless communication module is selected according to an actual need, and is not specifically demanded. The wireless control terminal 18 is a mobile device, such as a mobile phone, a computer, and a pad.

In this case, the wireless control terminal 18 is configured as follows:
The controller 16 sends the remaining capacity of the energy storage module to the wireless control terminal 18 through the wireless communication module 17. The wireless control terminal 18 receives the remaining capacity from the controller 16 and outputs a user-perceptive remaining capacity prompt, for example, displays time that can be used by the remaining capacity, the remaining capacity or a percentage of the remaining capacity.

The wireless control terminal 18 sends a manual rising instruction and a manual sinking instruction to the controller 16 based on a user input.

The controller 16 is configured to:
send the rising instruction to the power device based on the received manual rising instruction; and
send the sinking instruction to the power device based on the received manual sinking instruction.

According to the remaining capacity, whether the cleaning apparatus for a surface submerged in a liquid rises for charging is determined by the user. If so, the rising instruction is input. The wireless control terminal 18 sends the rising instruction to the controller 16 through the wireless communication module 17. Upon reception of the rising instruction, the controller 16 controls the power device, such that the power device drives the partition device 2 to move, the airtight space increases and the apparatus body 14 rises.

After the cleaning apparatus rises to the water surface, the photovoltaic power generation unit 24 receives sunlight. The energy storage module stores electric energy. When the electric energy is fully stored or meets a use requirement, the wireless control terminal 18 sends the sinking instruction to the controller 16 through the wireless communication module 17. Upon reception of the sinking instruction, the controller 16 controls the power device, such that the power device drives the partition device 2 to move, the airtight space decreases, and the apparatus body 14 sinks (this process can be implemented in an idle state of the cleaning apparatus for a surface submerged in a liquid).

In some possible embodiments, the controller 16 is configured to:
allow, if a percentage of the remaining capacity is ≥M%, the cleaning apparatus for a surface submerged in a liquid to sink; and
allow, if the percentage of the remaining capacity is ≤N%, M>N, the cleaning apparatus for a surface submerged in a liquid to rise.

Upon reception of monitoring information on the remaining capacity of the energy storage module, the controller 16 compares received percentage information of the remaining capacity with a preset sinking standard value M% of the remaining capacity and a preset rising standard value N% of the remaining capacity. If the percentage of the remaining capacity is ≥M%, the controller 16 controls the power device, such that the power device drives the partition device 2 to move, the airtight space decreases and the apparatus body 14 sinks. If the percentage of the remaining capacity is ≤N%, the controller 16 controls the power device, such that the power device drives the partition device to move, the airtight space increases and the apparatus body 14 rises. M is 85-90, and N is 10-15. The M and the N are selected according to an actual need.

In some possible embodiments, the controller 16 is further configured to generate a rechargeable time period and a non-rechargeable time period based on a light intensity. The rechargeable time period and the non-rechargeable time period are determined according to the light intensity. If the light intensity is less than 1,000 W/m², the non-rechargeable time period is determined. Otherwise, the rechargeable time period is determined. The wireless control terminal 18 can search the light intensity in real time according to big data, and send the light intensity to the controller 16. The controller 16 makes the following determinations.

If the percentage of the remaining capacity is ≤N%, and present time falls within the rechargeable time period, the cleaning apparatus for a surface submerged in a liquid rises.

If the percentage of the remaining capacity is ≤N%, and the present time falls within the non-rechargeable time period, the cleaning apparatus for a surface submerged in a liquid halts, until transitioning to the rechargeable time period.

In some possible embodiments, the cleaning apparatus for a surface submerged in a liquid further includes activity detecting unit 22 in signal connection with the controller 16 and configured to detect whether the pool is used.

If the controller 16 receives information that the pool is used, the controller 16 sends the rising instruction to the power device.

The activity detecting unit 22 includes a water surface fluctuation detection unit configured to detect a fluctuation of a pool water surface. The water surface fluctuation detection unit is a laser displacement sensor, and is a commercially available product. The water surface fluctuation detection unit is selected according to an actual need.

The energy assembly 23 further includes a heat dissipation element. The heat dissipation element is connected to the energy storage module to dissipate heat of the energy storage module. The heat dissipation element is provided on an outer surface of the energy storage module. One end of the heat dissipation element contacts the energy storage module for heat conduction. The heat dissipation element is not limited in specific shape, and may be strip-shaped, net-like or the like. For the sake of full heat dissipation, the heat dissipation element is preferably of a shape with a larger contact area with the energy storage module. For uniform heat dissipation, a shape of a contact surface of the heat dissipation element with the energy storage module is symmetric. This ensures the uniform heat dissipation of the heat dissipation element, and prolongs a service life of the energy storage module.

Usually, the heat dissipation element is made of a metal, with one side contacting the energy storage module being gridded, and the other side extending outward and contacting water or air. This can quickly dissipate heat of the energy storage module.

The energy assembly 23 further includes at least one charging port. The energy storage module is connected to the charging port. The charging port is formed in a housing of the energy storage module, with a junction subjected to waterproof treatment. The charging port may be connected to an external power source, and may continuously supply power to the energy storage module. In response to a power shortage of the solar energy, this is energy-saving and can ensure normal use of the device.

When the cleaning apparatus for a surface submerged in a liquid works, the solar panel converts the solar energy into the electric energy, and stores the electric energy to the energy storage module. The energy storage module is connected to the apparatus body 14 through a cable, and provides the electric energy for the apparatus body 14. Alternatively, the solar panel is electrically connected to the apparatus body 14. The solar panel supplies power to the apparatus body 14.

When the electric energy converted by the solar panel cannot be continuously provided for the cleaning apparatus for a surface submerged in a liquid, or in case of an overcast or a severe weather, the external power source can be connected through the charging port, and the external power source charges the energy storage device.

In response to underwater cleaning of the cleaning apparatus for a surface submerged in a liquid, an impeller rotates to pump sewage in brushing of the cleaning drum 1. The sewage enters the filter box for filtration. Filtered clean water is discharged from the water outlet 25. The controller 16 controls the drive module, thereby driving the traveling module to travel. Under the gravity of the cleaning apparatus for a surface submerged in a liquid and a pressure provided by discharged water, the cleaning apparatus for a surface submerged in a liquid travels at the bottom and the wall of the pool, and the cleaning drum 1 brushes the bottom and the wall of the pool.

When the percentage of the remaining capacity of the energy storage module is less than N%, and the present time falls within the rechargeable time period, the cleaning apparatus for a surface submerged in a liquid stops working, and the rising instruction is input by the user from the wireless control terminal 18. Through the wireless communication module 17, the controller 16 receives the rising instruction. The controller 16 controls the buoyancy adjusting structure 15 to adjust a buoyancy of the cleaning apparatus for a surface submerged in a liquid. The power assembly operates (the motor rotates or the motor and the decelerator rotate), thereby driving the power transmission assembly 3. The power transmission assembly 3 performs power transmission, and converts rotation of the power assembly into a linear motion, thereby driving the partition device 2 to make a linear reciprocating motion, increasing the volume of the airtight space, and discharging the water between the partition device 2 and the end cover 6. The cleaning apparatus for a surface submerged in a liquid suffers from a weight loss, a force unbalance, and the greater buoyancy. The cleaning apparatus for a surface submerged in a liquid automatically rises. The photovoltaic power generation unit 24 receives the sunlight for photovoltaic conversion, and stores electric energy to the energy storage module.

When the percentage of the remaining capacity of the cell is greater than M%, and in response to a signal that the pool is not used, the controller 16 sends the signal to the wireless control terminal 18 through the wireless communication module 17, and the sinking instruction is input by the user. The sinking instruction is sent to the controller 16 through the wireless communication module 17. The controller 16 controls the buoyancy adjusting structure 15. The power assembly rotates reversely. The power transmission assembly 3 performs power transmission, and converts rotation of the power assembly into a linear motion, thereby driving the partition device 2 to move reversely, and decreasing the volume of the airtight space. With the greater weight and the smaller buoyancy, the cleaning apparatus for a surface submerged in a liquid sinks for underwater cleaning.

The cleaning apparatus for a surface submerged in a liquid further includes a contact interface structure connected to cell 33 on the apparatus body. When the cleaning apparatus for a surface submerged in a liquid is to be charged, the automatic rising-sinking structure operates, such that the cleaning apparatus for a surface submerged in a liquid rises or sinks, and is charged through the contact interface structure. Upon completion of charging, the cleaning apparatus for a surface submerged in a liquid automatically sinks, without being manually searched.

As shown in FIGS. 11-18, the contact interface structure is a magnetic interface structure. The magnetic interface structure includes:
first magnetic connection assembly 26 provided with a charging pin set and a detecting pin set; and
second magnetic connection assembly 27 including detection control device 29, a charging stand set corresponding to the charging pin set, a detecting stand set corresponding to the detecting pin set, and switch assembly 28. A magnetism of the first magnetic connection assembly 26 is opposite to a magnetism of the second magnetic connection assembly 27. The detection control device 29 is configured to:
   connect, if the detecting pin set contacts the detecting stand set, the switch assembly, such that a charging loop is turned on; and disconnect, if the detecting pin set is disconnected from the detecting stand set, the switch assembly, such that the charging loop is turned off. Through contact or disconnection of the detecting pin set and the detecting stand set, the switch assembly is connected or disconnected, thereby turning on or off the charging loop, and controlling whether the power source charges the cell.

The first magnetic connection assembly 26 and the second magnetic connection assembly 27 are automatically centered in insertion under a mutual attractive magnetic force, such that the detecting pin set contacts the detecting stand set accurately and reliably, and the charging pin set contacts the charging stand set accurately and reliably. This prevents misjudgment.

Both the charging pin set and the detecting pin set are connected to the power source. Both the charging stand set and the detecting stand set are connected to the cell 33. After the first magnetic connection assembly 26 contacts the second magnetic connection assembly 27, the power source charges the cell 33. The power source may be a power box.

The first magnetic connection assembly 26 and the second magnetic connection assembly 27 each are provided with a magnetic element. Two magnetic elements have opposite magnetisms. The magnetic element may be a magnet. In the embodiment, a cross section of the magnetic element is circular or elliptical, such that the first magnetic connection assembly 26 and the second magnetic connection assembly 27 are accurately centered under the mutual attractive magnetic force.

A charging pin in the charging pin set and a detecting pin in the detecting pin set are mounted as follows: A distance from a terminal of the detecting pin set to a terminal of the detecting stand set is greater than a distance from a terminal of the charging pin set to a terminal of the charging stand set. In the embodiment, a head end of the charging pin and a head end of the detecting pin are not flush, with a distance difference therebetween. The head end of the charging pin is protruded out of the head end of the detecting pin. That is, with a plane in front of the first magnetic connection assembly 26 and parallel to a head end of each of a plurality of charging pins in the charging pin set as a datum plane, a distance from the head end of the charging pin to the datum plane is less than a distance from the head end of the detecting pin to the datum plane. In response to insertion of the first magnetic connection assembly 26 and the second magnetic connection assembly 27, the charging pin set contacts the charging stand set first, and then the detecting pin set contacts the detecting stand set, so as to prevent arc discharge when the charging pin set contacts the charging stand set to form reliable connection. In response to separation of the first magnetic connection assembly 26 and the second magnetic connection assembly 27, the detecting pin set is separated from the detecting stand set first, and then the charging pin set is separated from the charging stand set, so as to prevent arc discharge when the charging pin set and the charging stand set are pulled out and separated.

The head end of the charging pin and the head end of the detecting pin are not flush, with the distance difference therebetween. The head end of the charging pin is protruded out of the head end of the detecting pin. After a positive charging pin and a negative charging pin are respectively reliably connected to a positive charging stand and a negative charging stand, the detecting pin contacts the detecting stand. Under the control of the detection control device 29, the switch assembly is connected, the charging loop is turned on, and the power source charges the cell. The power source is turned on after the charging pin and the charging stand are reliably connected, so as to prevent arc discharge in the insertion of the first magnetic connection assembly 26 and the second magnetic connection assembly 27. When the first magnetic connection assembly 26 and the second magnetic connection assembly 27 are pulled out and separated, the detecting pin is disconnected from the detecting stand first. Under the control of the detection control device 29, the switch assembly is disconnected, the charging loop is turned off, the positive charging pin and the negative charging pin are respectively disconnected from the positive charging stand and the negative charging stand, and the power source stops charging the cell. The power source is turned off, and then the charging pin and the charging stand are disconnected, so as to prevent arc discharge in the separation of the first magnetic connection assembly 26 and the second magnetic connection assembly 27.

Specifically, when the first magnetic connection assembly 26 and the second magnetic connection assembly 27 get close to each other, under mutual attraction between the magnetic elements, the first magnetic connection assembly 26 contacts the second magnetic connection assembly 27, and the charging pin set contacts the charging stand set. After the charging pin set is reliably connected to the charging stand set, under the mutual attraction between the magnetic elements, the detecting pin set contacts the detecting stand set. After the detection control device 29 detects that the detecting pin set contacts the detecting stand set, the switch assembly 28 is connected to form the charging loop. In this case, the power source can charge the cell 33. This transfers the arc discharge between the charging pin set and the charging stand set to the arc discharge between the detecting pin set and the detecting stand set. Since the charging pin set is reliably connected to the charging stand set, a charging voltage is far greater than a voltage of a charging control circuit, thereby preventing the arc discharge when the charging pin set contacts the charging stand set to form reliable connection.

When the first magnetic connection assembly 26 and the second magnetic connection assembly 27 get away from each other, since a length of the detecting pin in the detecting pin set is less than a length of the charging pin in the charging pin set, the detecting pin set is disconnected from the detecting stand set first. When the detection control device 29 detects that the detecting pin set is disconnected from the detecting stand set, the switch assembly 28 is disconnected to form an open circuit, and the charging loop is turned off. While the first magnetic connection assembly 26 gets away from the second magnetic connection assembly 27, the charging pin set is disconnected from the charging stand set. In this case, the power source charges the cell 33 completely. Since the open circuit is formed first, and then the charging pin set is disconnected from the charging stand set, the arc discharge when the charging pin set is pulled out and separated from the charging stand set is prevented.

The length of the charging pin in the charging pin set may be the same as the length of the detecting pin in the detecting pin set. Alternatively, the length of the charging pin in the charging pin set may be greater than the length of the detecting pin in the detecting pin set. Alternatively, the length of the charging pin in the charging pin set may be less than the length of the detecting pin in the detecting pin set. The length of the charging pin in the charging pin set and the length of the detecting pin in the detecting pin set are selected according to an actual need, and are not specifically demanded herein. In the embodiment, preferably, the length of the charging pin in the charging pin set is greater than the length of the detecting pin in the detecting pin set. In mounting, a foot end of the charging pin is flush with a foot end of the detecting pin, while the head end of the charging pin is not flush with the head end of the detecting pin, and the head end of the charging pin is protruded out of the head end of the detecting pin.

Certainly, a micro-electric push rod may also be provided in a housing of the first magnetic connection assembly 26. The micro-electric push rod is connected to the detecting pin set. Through the micro-electric push rod, the detecting pin in the detecting pin set moves, such that the charging pin set contacts the charging stand set first and then the detecting pin set contacts the detecting stand set when the first magnetic connection assembly 26 is inserted with the second magnetic connection assembly 27, and the detecting pin set is separated from the detecting stand set first and then the charging pin set is separated from the charging stand set when the first magnetic connection assembly 26 is separated from the second magnetic connection assembly 27.

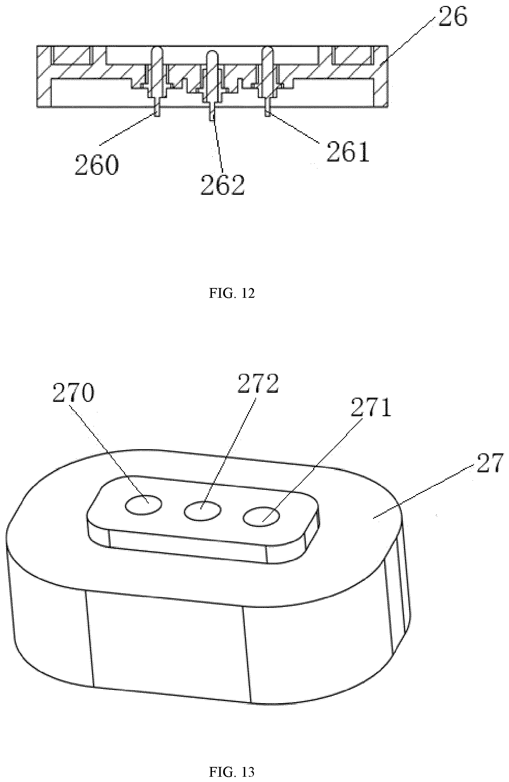

As shown in FIG. 11 and FIG. 12, the charging pin set at least includes positive charging pin 260 and negative charging pin 261. There is at least one positive charging pin 260. There is at least one negative charging pin 261. The positive charging pin and the negative charging pin are selected and provided according to an actual need, and are not specifically demanded. The positive charging pin 260 and the negative charging pin 261 may be a spring probe, and are a commercially available product. The positive charging pin and the negative charging pin are selected according to an actual need.

There is at least one detecting pin 262 in the detecting pin set. A number of the detecting pins 262 is selected and provided according to an actual need, and is not specifically demanded. The detecting pin 262 may be a spring probe, and is a commercially available product. The detecting pin is selected according to an actual need.

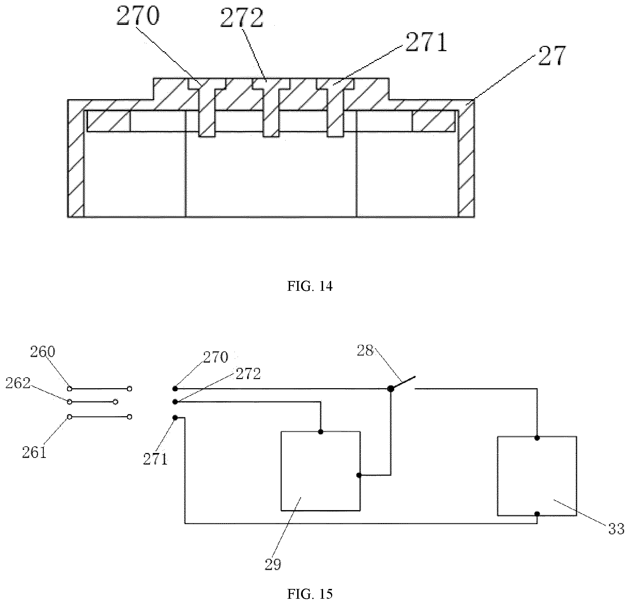

As shown in FIG. 13 and FIG. 14, the charging stand set at least includes positive charging stand 270 corresponding to the positive charging pin 260 and negative charging stand 271 corresponding to the negative charging pin 261. The positive charging pin 260 corresponds to the positive charging stand 270 in position, and the negative charging pin 261 corresponds to the negative charging stand 271 in position. When the first magnetic connection assembly 26 and the second magnetic connection assembly 27 are get close to each other and contact, the positive charging pin 260 contacts the positive charging stand 270 to form reliable connection, and the negative charging pin 261 contacts the negative charging stand 271 to form reliable connection, thereby forming a charging loop.

A number of detecting stands 272 in the detecting stand set is the same as a number of the detecting pins 262 in the detecting pin set. The detecting pins 262 are in one-to-one correspondence with the detecting stands 272 in position. When the first magnetic connection assembly 26 contacts the second magnetic connection assembly 27, after the positive charging pin 260 is reliably connected to the positive charging stand 270 and the negative charging pin 261 is reliably connected to the negative charging stand 271, the detecting pins 262 respectively contact the detecting stands 272 to form reliable connection. When the detection control device 29 detects this signal, the switch assembly 28 is connected, such that the charging loop is turned on, and the power source charges the cell 33.

The positive charging stand 270 is connected to positive electrode 500 of the cell 33, and the negative charging stand 271 is connected to negative electrode 501 of the cell 33, such that after the positive charging pin 260 contacts the positive charging stand 270 to form the reliable connection, and the negative charging pin 261 contacts the negative charging stand 271 to form the reliable connection, the charging loop can charge the cell 33.

After the positive charging pin 260, the negative charging pin 261, and the detecting pin 262 are mounted, a head end of the positive charging pin 260 and a head end of the negative charging pin 261 are protruded out of a head end of the detecting pin 262, such that after the positive charging pin 260 contacts the positive charging stand 270 to form the reliable connection, and the negative charging pin 261 contacts the negative charging stand 271 to form the reliable connection, the detecting pin 262 contacts the detecting stand set 202, and after the detecting pin 262 is separated from the detecting stand set 202, the positive charging pin 260 is separated from the positive charging stand 270, and the negative charging pin 261 is separated from the negative charging stand 271. With a time difference in contact, the reliable charging loop is formed, the service life of the charging pin and the charging stand is prolonged, the arc discharged is prevented, and the safety in use is improved.

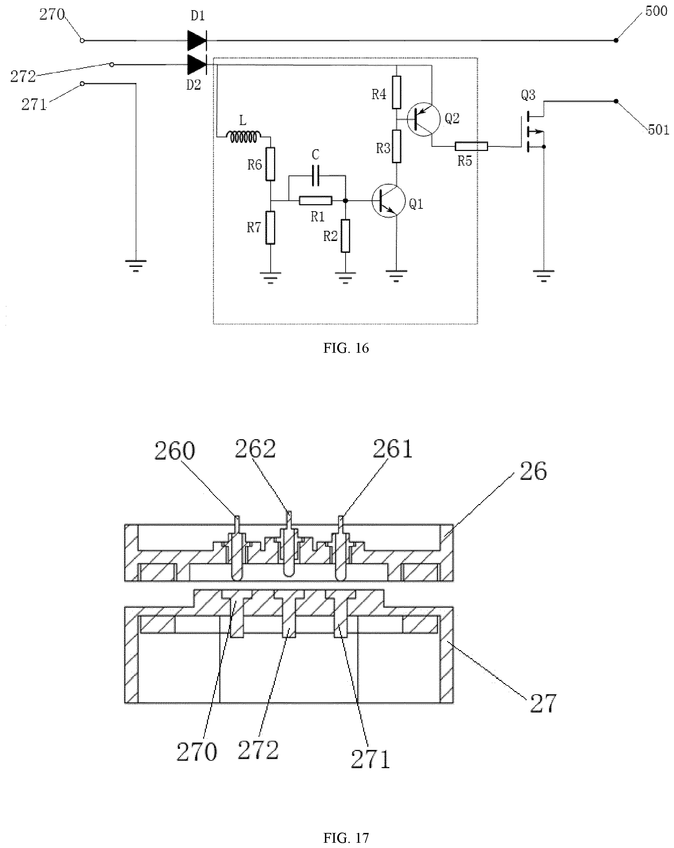

As shown in FIG. 15 and FIG. 16, the switch assembly 28 is connected between the positive charging stand 270 and the positive electrode 500 of the cell 33. Alternatively, the switch assembly 28 is connected between the negative charging stand 271 and the negative electrode 501 of the cell 33. Through connection and disconnection of the switch assembly 28, the charging loop is turned on and off, thereby turning on and off the power source to charge the cell 33.

First diode D1 is connected between the positive charging stand 270 and the positive electrode 500 of the cell 33. A positive electrode of the first diode D1 is connected to the positive charging stand 270, and a negative electrode of the first diode D1 is connected to the positive electrode 500 of the cell 33. Second diode D2 is connected between the detecting stand 272 set and the detection control device 29. A positive electrode of the second diode D2 is connected to the detecting stand 272 set, and a negative electrode of the second diode D2 is connected to the detection control device 29. With the first diode D1 and the second diode D2, when the charging loop is turned on, the power source can charge the cell 33. In a reverse direction, the power source does not charge the cell.

The detection control device 29 can connect or disconnect the switch assembly 28 according to contact or disconnection between the detecting pin 262 and the detecting stand 272, thereby turning on or off the charging loop, and controlling whether the power source charges the cell 33. The detection control device 29 includes:
a switch circuit module configured to control connection and disconnection the switch assembly 28; and
an acceleration module connected to the switch circuit module, and configured to accelerate a switching speed of the switch circuit module, thereby accelerating a speed of connecting and disconnecting the switch assembly 28, and ensuring that the switch assembly 28 can be connected before the positive charging pin 260 and the positive charging stand 270 as well as the negative charging pin 261 and the negative charging stand 271 are connected, and the switch assembly 28 can be disconnected before the positive charging pin 260 and the positive charging stand 270 as well as the negative charging pin 261 and the negative charging stand 271 are disconnected.

The detection control device 29 further includes a current delayed increasing module connected to the switch circuit module, and configured to increase a current in the switch circuit module with a delay to protect the switch circuit module.

The switch circuit module includes a first triode circuit and a second triode circuit that are connected to each other. The first triode circuit includes first triode Q1, first resistor R1, second resistor R2, and third resistor R3. A first terminal of the second resistor R2 is connected to the first resistor R1 to form a common connection junction, and a second terminal of the second resistor R2 is grounded. A base of the first triode Q1 is connected to the common connection junction between the first resistor R1 and the second resistor R2, a collector of the first triode Q1 is connected to a first terminal of the third resistor R3, and an emitter of the first triode Q1 is grounded.

The second triode circuit includes second triode Q2, fourth resistor R4, and fifth resistor R5. A second terminal of the third resistor R3 is connected to a first terminal of the fourth resistor R4 to form a common connection junction. A second terminal of the fourth resistor R4 is connected to the detecting stand set. A base of the second triode Q2 is connected to the common connection junction between the third resistor R3 and the fourth resistor R4, an emitter of the second triode Q2 is connected to the detecting stand set, and a collector of the second triode Q2 is connected to the switch assembly Q3 through the fifth resistor R5.

The acceleration module includes capacitor C. The capacitor C is connected to two terminals of the first resistor R1 in parallel. That is, a first terminal of the capacitor C is connected to one terminal of the first resistor R1, and a second terminal of the capacitor C is connected to one terminal of the first resistor R1 connected to the second resistor R2. The capacitor C can accelerate a switching action of the first triode Q1 and the second triode Q2. The capacitor C, the first resistor R1, the second resistor R2, the third resistor R3, the fourth resistor R4, the fifth resistor R5, the first triode Q1, and the second triode Q2 are a commercially available product, and are selected according to an actual need.

The current delayed increasing module includes inductor L. A first terminal of the inductor L is connected to the detecting stand set, and a second terminal of the inductor L is connected to the first resistor R1 through sixth resistor R6.

A common connection junction between the first resistor R1 and the sixth resistor R6 is connected to a first terminal of a seventh resistor R7, and a second terminal of the seventh resistor R7 is grounded.

The inductor L, the sixth resistor R6, and the seventh resistor R7 are a commercially available product, and are selected according to an actual need. The inductor L can delay increasing a current in the charging loop when the charging loop is turned on and off, thereby protecting the charging loop.

The switch assembly 28 is an electronic switch. The electronic switch is one or more of a MOS transistor, a triode, and a diode, and is selected according to an actual need. In the embodiment, preferably, the electronic switch is MOS transistor Q3. The MOS transistor Q3 includes a gate connected to the fifth resistor R5, a source connected to the negative electrode 501 of the cell 33, and a drain connected to the ground.

After the detecting pin 262 contacts the detecting stand 272, the power source supplies power to the detection control device 29 through the detecting pin 262. After the detection control device 29 is powered on, the switch assembly 28 is connected, thereby forming the charging loop to charge the cell 33. The inductor L delays increasing the current of the circuit when powered on. The capacitor C accelerates the switching action of the first triode Q1 and the second triode Q2, thereby accelerating the speed of connecting and disconnecting the switch assembly 28, and ensuring that the switch assembly 28 can be connected after the positive charging pin 260 and the negative charging pin 261 are respectively connected to the positive charging stand 270 and the negative charging stand 271, and the switch assembly 28 can be disconnected before the positive charging pin 260 and the negative charging pin 261 are respectively disconnected from the positive charging stand 270 and the negative charging stand 271. Therefore, the arc discharge in the contact and separation of the first magnetic connection assembly 26 and the second magnetic connection assembly 27 is prevented.

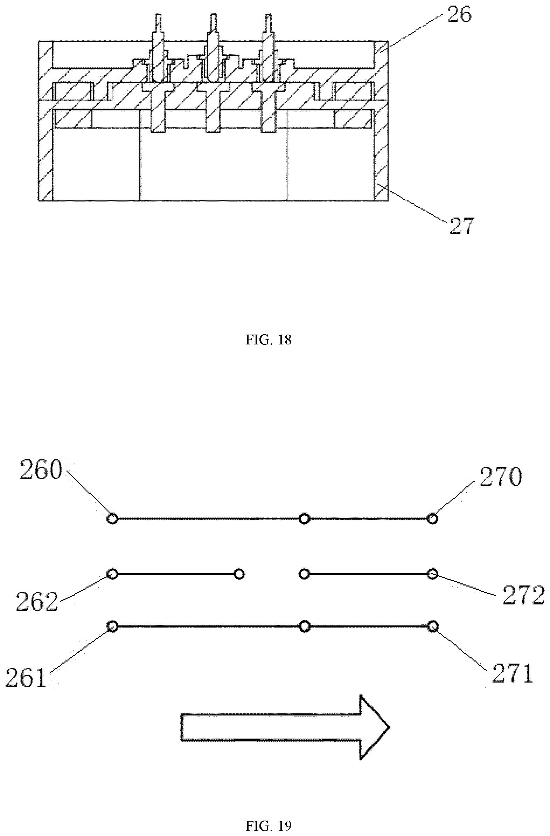

The magnetic interface structure works as follows:
As shown in FIG. 17 and FIG. 19, when the first magnetic connection assembly 26 is inserted with the second magnetic connection assembly 27, there is a distance difference between the head end of the positive charging pin 260 and the head end of the detecting pin 262 as well as between the head end of the negative charging pin 261 and the head end of the detecting pin. Under the magnetic attraction force, the positive charging pin 260 and the negative charging pin 261 respectively contact the positive charging stand 270 and the negative charging stand 271 first for centering and positioning. The positive charging pin 260 and the negative charging pin 261 respectively fully contact the positive charging stand 270 and the negative charging stand 271 to form reliable connection.

As shown in FIG. 18 and FIG. 20, under the continuous magnetic attraction force, the detecting pin 262 contacts the detecting stand 272. In this case, the detection control device 29 detects that the detecting pin 262 is connected to the detecting stand 272, the power source supplies the power to the detection control device 29, and under the control of the detection control device 29, the switch assembly 28 is connected to form a charging loop. Since the positive charging pin 260 and the negative charging pin 261 are respectively reliably connected to the positive charging stand 270 and the negative charging stand 271, arc discharge when the first magnetic connection assembly 26 is inserted with the second magnetic connection assembly 27 is prevented.

As shown in FIG. 21, when the first magnetic connection assembly 26 and the second magnetic connection assembly 27 are separated from each other, since the positive charging pin 260 and the negative charging pin 261 are longer than the detecting pin 262, the detecting pin 262 is disconnected from the detecting stand 272 first under an external force. In this case, the detection control device 29 detects that the detecting pin 262 is disconnected. Under the control of the detection control device 29, the switch assembly 28 is disconnected to form an open circuit.

As shown in FIG. 22, under the continuous external force, the positive charging pin 260 and the negative charging pin 261 are respectively disconnected from the positive charging stand 270 and the negative charging stand 271. Since the charging loop is open when the detecting pin 262 is disconnected from the detecting stand 272, arc discharge when the first magnetic connection assembly 26 and the second magnetic connection assembly 27 are separated is prevented.

Due to the magnetic interface structure, the positive charging pin 260 is magnetically connected to the positive charging stand 270, the negative charging pin 261 is magnetically connected to the negative charging stand 271, and the detecting pin 262 is magnetically connected to the detecting stand 272.

In addition, as described above, referring to FIG. 15, FIG. 17 to FIG. 22, in response to charging insertion, during a period from just contact to reliable connection of the charging pin set and the charging stand set, the first magnetic connection assembly 26 and the second magnetic connection assembly 27 still get close to each other. Hence, one of the charging pin set and the charging stand set may be set as a telescopic structure, or a structure in which the charging pin set may slide relative to the first magnetic connection assembly 26, or a structure in which the charging stand set may slide along the second magnetic connection assembly 27. In the figure, the structure in which the charging pin set slides relative to the first magnetic connection assembly 26 is shown. In this case, a reset spring is further provided between the charging pin set and the first magnetic connection assembly 26, such that the charging pin set can be reset.

According to the above technical solutions, the cleaning apparatus for a surface submerged in a liquid includes the buoyancy adjusting structure. The buoyancy adjusting structure forms the airtight space in the structural main body. By changing a volume of the airtight space, a buoyancy of the buoyancy adjusting structure is controlled. With the adjustable buoyancy, the buoyancy adjusting structure can rise or sink in water. The buoyancy adjusting structure is provided in a cleaning drum of the cleaning apparatus for a surface submerged in a liquid, such that the cleaning apparatus for a surface submerged in a liquid has an adjustable buoyancy, and the cleaning apparatus for a surface submerged in a liquid automatically rises out of a water surface when to be charged. The cleaning apparatus for a surface submerged in a liquid can also automatically rises out of the water surface when a filter box is to be cleaned or machine maintenance is required, without being manually searched and lifted out of the water surface. This reduces a manual labor, shortens searching time, and improves a working efficiency. With the internal space of the cleaning drum for providing the cleaning apparatus for a surface submerged in a liquid, improvement on an overall structure of the cleaning apparatus for a surface submerged in a liquid turns out to be unnecessary.

The cleaning apparatus for a surface submerged in a liquid includes the wireless charging module, such that the cleaning apparatus for a surface submerged in a liquid can be charged wirelessly without a cable. The cleaning apparatus for a surface submerged in a liquid can be charged wirelessly, and thus is not limited by an environment.

The capacity detecting module can monitor the remaining capacity of the cell in the apparatus body, and sends the remaining capacity to the controller. The controller controls the buoyancy adjusting structure according to the remaining capacity. Alternatively, the controller sends the remaining capacity of the cell to the wireless control terminal through the wireless communication module. The rising instruction or the sinking instruction is input by the user to control the cleaning apparatus for a surface submerged in a liquid to rise or sink. Therefore, the cleaning apparatus for a surface submerged in a liquid automatically rises or sinks when to be charged.

When the cleaning apparatus for a surface submerged in a liquid rises to the water surface, the position detecting module detects the position of the wireless-charging transmitting terminal, and sends the position to the controller. The controller controls the cleaning apparatus for a surface submerged in a liquid to travel close to the wireless-charging transmitting terminal, such that the receiving terminal of the wireless charging module corresponds to the wireless-charging transmitting terminal for wireless charging. Therefore, the cleaning apparatus for a surface submerged in a liquid automatically searches the wireless-charging transmitting terminal.

The solar panel can convert light energy into electric energy, and store the electric energy to the energy storage module, so as to supply power to the apparatus body. The apparatus body is continuously powered with a clean energy source, thereby being more environment-friendly. In case of a power shortage of the solar energy, the energy storage module can be connected to an external power source to continuously supply the power to the device. This is energy-saving and can ensure normal use of the device.

The wireless control terminal communicates with the controller through the wireless communication module. Based on information such as the remaining capacity of the energy storage module, whether present time falls within the rechargeable time period, and whether the pool is used, the rising or sinking instruction can be input at the wireless control terminal, to control the cleaning apparatus for a surface submerged in a liquid to rise and sink. This can realize remote control on the cleaning apparatus for a surface submerged in a liquid. Through the remote control, a rising state, a sinking state and an underwater working state of the cleaning apparatus for a surface submerged in a liquid can be controlled.

While a density of a material of the cleaning apparatus is less than a density of the liquid, the automatic rising-sinking structure can further control the cleaning apparatus to rise or sink automatically according to a principle that a buoyancy is greater than the gravity when the pump does not work, and a buoyancy is less than a sum of the gravity and the pressure when the pump works. Alternatively, while the density of the material of the cleaning apparatus is less than the density of the liquid, a working pumping pressure of the pump is controlled, thereby controlling a relation between the buoyancy and the sum of the gravity and the pressure to realize automatic rise or sink of the cleaning apparatus. The machine is not manually searched and lifted out of the water surface, and this reduces the manual labor.

The cleaning apparatus for a surface submerged in a liquid includes the magnetic interface structure. The switch assembly is normally open. In response to insertion, the charging pin set contacts the charging stand set first. When the charging pin set almost or just contacts the charging stand set, the switch assembly is disconnected. The charging loop connected between the charging pin set and the charging stand set is turned off. Neither a voltage nor a current exists between the charging pin set and the charging stand set.

While the insertion (the insertion is realized through a magnetic attraction force between the first magnetic connection assembly and the second magnetic connection assembly at the opposite magnetisms) is continued, the detecting pin set contacts the detecting stand set. In this case, the switch assembly operates, and it can be determined that "the charging pin set is reliably connected to the charging stand set". The switch assembly is switched from a disconnected state to a connected state. The charging loop between the charging pin set and the charging stand set is turned on for charging. At the beginning of the charging, the charging pin set is reliably connected to the charging stand set, thus preventing arc discharge.

When the charging is terminated for completion (or other needs), the first magnetic connection assembly is gradually separated from the second magnetic connection assembly, the detecting pin set is disconnected from the detecting stand set, and the switch assembly is disconnected. From initial separation to disconnection of the switch assembly, the charging pin set is always reliably connected to the charging stand set to prevent arc discharge. After the switch assembly is disconnected, since the charging loop is turned off when the charging pin set and the charging stand set are almost or just separated, there is no arc discharge between the charging pin set and the charging stand set.

The head end of the detecting pin and the head end of the charging pin are not flush, with a distance difference therebetween. Through cooperation between the detection control device and the switch assembly, a time difference in contact between the charging pin and the charging stand is formed, thereby forming the reliable charging loop. In response to charging, the charging loop is turned on with a delay. In response to an outage (the charging is terminated), the charging loop is turned off in advance to reduce arc discharge. This prolongs a service life of the charging pin and the charging stand, protects the charging pin and the coating of the charging stand, and is safe and reliable in use.

The magnetism of the first magnetic connection assembly is opposite to the magnetism of the second magnetic connection assembly. Under a mutual magnetic attraction force, the first magnetic connection assembly and the second magnetic connection assembly are centered, such that the charging pin set is aligned at the charging stand set, and the detecting pin set is aligned at the detecting stand set, to prevent a phenomenon that "the contact between the detecting pin set and the detecting stand set is earlier than the contact between the charging pin set and the charging stand set in the insertion" due to mutual inclination between the first magnetic connection assembly and the second magnetic connection assembly. With the accurate and reliable contact, reliable connection is formed to prevent a misjudgment (in the charging insertion, the contact between the detecting pin set and the detecting stand set is earlier than the contact between the charging pin set and the charging stand set. In the outage separation, separation between the detecting pin set and the detecting stand set is later than separation between the charging pin set and the charging stand set), thereby further reducing the arc discharge.

Embodiments of the present disclosure are described in detail above, but the contents are only preferred embodiments of the present disclosure and cannot be considered as limiting the scope of embodiments of the present disclosure. Any equivalent modifications, improvements, etc. made within the application scope of the present disclosure should fall within the protection scope of the present disclosure.

## Claims

1. A cleaning apparatus for a surface submerged in a liquid, comprising:
an apparatus body; and
an automatic rising-sinking structure, wherein through an operation of the automatic rising-sinking structure, the apparatus body rises or sinks.

2. The cleaning apparatus for the surface submerged in the liquid according to claim 1, wherein the automatic rising-sinking structure is a buoyancy adjusting structure; and by adjusting a buoyancy, the cleaning apparatus for the surface submerged in the liquid rises or sinks.

3. The cleaning apparatus for the surface submerged in the liquid according to claim 1, wherein the automatic rising-sinking structure is constructed as follows:
a pump does not work, and when submerged in a liquid, the cleaning apparatus for the surface submerged in the liquid rises due to a buoyancy greater than a gravity, until being partially exposed out of a liquid surface; and
the pump works, and the cleaning apparatus for the surface submerged in the liquid is pressed on a submerged surface through a pressure of a liquid produced when the pump works.

4. The cleaning apparatus for the surface submerged in the liquid according to claim 1, wherein the automatic rising-sinking structure is constructed as follows:
a pump works at a first pumping pressure, and when submerged in a liquid, the cleaning apparatus for the surface submerged in the liquid rises due to a buoyancy greater than a gravity, until being partially exposed out of a liquid surface; and
the pump works at a second pumping pressure greater than the first pumping pressure, and the cleaning apparatus for the surface submerged in the liquid is pressed on a submerged surface through a pressure of a liquid produced when the pump works at the second pumping pressure.

5. The cleaning apparatus for the surface submerged in the liquid according to claim 1, wherein the cleaning apparatus for the surface submerged in the liquid is applied to cleaning a pool, and a charging station is located at a bank of the pool.

6. The cleaning apparatus for the surface submerged in the liquid according to claim 5, wherein in a height direction, the charging station is located at any one of following positions on a wall of the pool:
a position between a bottom of the pool and a pool water surface;
a position near the pool water surface; and
a position above the pool water surface.

7. The cleaning apparatus for the surface submerged in the liquid according to claim 5, wherein the charging station is floated on a pool water surface.

8. The cleaning apparatus for the surface submerged in the liquid according to claim 2, further comprising a wireless charging module provided on the apparatus body, wherein the wireless charging module charges a cell in the apparatus body.

9. The cleaning apparatus for the surface submerged in the liquid according to claim 8, wherein the buoyancy adjusting structure comprises a structural main body with an opening at an end, a partition device provided in the structural main body, and a power device for driving the partition device to move; the partition device partitions an internal space of the structural main body to form an airtight space; the partition device moves relative to the structural main body; and the buoyancy in water is adjusted by changing a volume of the airtight space, such that the apparatus body rises and sinks.

10. The cleaning apparatus for the surface submerged in the liquid according to claim 9, wherein the wireless charging module comprises a receiving terminal, and the receiving terminal is connected to the cell in the apparatus body.

11. The cleaning apparatus for the surface submerged in the liquid according to claim 9 or 10, further comprising a position detecting module, wherein the position detecting module is connected to a controller in the apparatus body; the position detecting module detects a position of a wireless-charging transmitting terminal; and the controller controls the apparatus body to travel.

12. The cleaning apparatus for the surface submerged in the liquid according to claim 9, further comprising a capacity detecting module, wherein the capacity detecting module is connected to a controller and the cell in the apparatus body, and configured to detect a remaining capacity of the cell and send the remaining capacity to the controller; and the controller is configured to:
according to the received remaining capacity,
send a rising instruction to the power device, such that the power device drives the partition device to move, the airtight space increases and the apparatus body rises; and
send a sinking instruction to the power device, such that the power device drives the partition device to move, the airtight space decreases and the apparatus body sinks.

13. The cleaning apparatus for the surface submerged in the liquid according to claim 9, further comprising an energy assembly, wherein the energy assembly comprises a photovoltaic power generation unit and an energy storage module; the photovoltaic power generation unit supplies power to the apparatus body; and alternatively, the photovoltaic power generation unit supplies power to the apparatus body through the energy storage module.

14. The cleaning apparatus for the surface submerged in the liquid according to claim 13, wherein the photovoltaic power generation unit is located on an upper surface of the apparatus body, and the upper surface is an upward surface of the apparatus body in a floated state.

15. The cleaning apparatus for the surface submerged in the liquid according to claim 14, wherein the apparatus body further comprises a filter box provided on a path of a water channel, so as to intercept dirt in water flowing through the water channel; and
a filter chamber for accommodating the filter box is formed in the apparatus body; and an opening for allowing the filter box to get in and out is formed in an upper wall, a bottom wall or a circumferential wall of the filter chamber.

16. The cleaning apparatus for the surface submerged in the liquid according to claim 15, wherein the opening is formed in the upper wall of the filter chamber; the upper wall is an upward wall of the apparatus body in the floated state; and the apparatus body further comprises a cover plate configured to cover the opening in an openable and closable manner; and
the photovoltaic power generation unit is arranged along a surface of the cover plate away from the opening.

17. The cleaning apparatus for the surface submerged in the liquid according to claim 13, wherein the energy assembly is provided on the apparatus body, and rises or sinks synchronously with the apparatus body.

18. The cleaning apparatus for the surface submerged in the liquid according to claim 17, further comprising a capacity detecting unit, wherein the capacity detecting unit is connected to the energy storage module and a controller in the apparatus body, and configured to detect a remaining capacity of the energy storage module and send the remaining capacity to the controller; and the controller is configured to:
according to the received remaining capacity,
send a rising instruction to the power device, such that the power device drives the partition device to move, the airtight space increases and the apparatus body rises; and
send a sinking instruction to the power device, such that the power device drives the partition device to move, the airtight space decreases and the apparatus body sinks.

19. The cleaning apparatus for the surface submerged in the liquid according to claim 12 or 18, further comprising a wireless control terminal and a wireless communication module, wherein the controller in the apparatus body communicates with the wireless control terminal through the wireless communication module;
the wireless control terminal is configured to:
receive the remaining capacity from the controller and output a user-perceptive remaining capacity prompt; and
send a manual rising instruction and a manual sinking instruction to the controller through the wireless communication module based on a user input; and
the controller is further configured to:
send the rising instruction to the power device based on the received manual rising instruction; and
send the sinking instruction to the power device based on the received manual sinking instruction.

20. The cleaning apparatus for the surface submerged in the liquid according to claim 19, wherein the controller is configured to:
allow, if a percentage of the remaining capacity is ≥M%, the cleaning apparatus for the surface submerged in the liquid to sink; and
allow, if the percentage of the remaining capacity is ≤N%, M>N, the cleaning apparatus for the surface submerged in the liquid to rise.

21. The cleaning apparatus for the surface submerged in the liquid according to claim 20, wherein the controller is further configured to generate a rechargeable time period and a non-rechargeable time period based on a light intensity;
allow, if the percentage of the remaining capacity is ≤N%, and present time falls within the rechargeable time period, the cleaning apparatus for the surface submerged in the liquid to rise; and
allow, if the percentage of the remaining capacity is ≤N%, and the present time falls within the non-rechargeable time period, the cleaning apparatus for the surface submerged in the liquid to halt, until transitioning to the rechargeable time period.

22. The cleaning apparatus for the surface submerged in the liquid according to claim 21, further comprising an activity detecting unit in signal connection with the controller and configured to detect whether the pool is used, wherein
if receiving information that the pool is used, the controller sends the rising instruction to the power device.

23. The cleaning apparatus for the surface submerged in the liquid according to claim 22, wherein the activity detecting unit comprises a water surface fluctuation detection unit configured to detect a fluctuation of a pool water surface.

24. The cleaning apparatus for the surface submerged in the liquid according to claim 18, wherein the energy assembly further comprises a heat dissipation element; and the heat dissipation element is connected to the energy storage module to dissipate heat of the energy storage module.

25. The cleaning apparatus for the surface submerged in the liquid according to claim 18, wherein the energy assembly further comprises at least one charging port; and the energy storage module is connected to the charging port.

26. The cleaning apparatus for the surface submerged in the liquid according to claim 19, wherein the wireless communication module comprises at least one of a wireless fidelity (WiFi) communication module, a Bluetooth communication module, a fourth-generation (4G) module, a fifth-generation (5G) module, or a general packet radio service (GPRS) module.

27. The cleaning apparatus for the surface submerged in the liquid according to any one of claims 1 to 7, further comprising a contact interface structure connected to a cell on the apparatus body, wherein when the cleaning apparatus for the surface submerged in the liquid is to be charged, the automatic rising-sinking structure operates, such that the cleaning apparatus for the surface submerged in the liquid rises or sinks, and is charged through the contact interface structure; and
after floating up, the cleaning apparatus for the surface submerged in the liquid is electrically connected to the charging station through the contact interface structure.

28. The cleaning apparatus for the surface submerged in the liquid according to claim 27, wherein the contact interface structure is a magnetic interface structure; and the magnetic interface structure comprises:
a first magnetic connection assembly provided with a charging pin set and a detecting pin set; and
a second magnetic connection assembly comprising a detection control device, a charging stand set corresponding to the charging pin set, a detecting stand set corresponding to the detecting pin set, and a switch assembly, wherein a magnetism of the first magnetic connection assembly is opposite to a magnetism of the second magnetic connection assembly; and the detection control device is configured to:
connect, if the detecting pin set contacts the detecting stand set, the switch assembly, such that a charging loop is turned on; and
disconnect, if the detecting pin set is disconnected from the detecting stand set, the switch assembly, such that the charging loop is turned off.

29. The cleaning apparatus for the surface submerged in the liquid according to claim 28, wherein a distance from a terminal of the detecting pin set to a terminal of the detecting stand set is greater than a distance from a terminal of the charging pin set to a terminal of the charging stand set.

30. The cleaning apparatus for the surface submerged in the liquid according to claim 29, wherein the detection control device comprises:
a switch circuit module configured to control connection and disconnection of the switch assembly.

31. The cleaning apparatus for the surface submerged in the liquid according to claim 30, wherein the detection control device further comprises:
an acceleration module connected to the switch circuit module, and configured to accelerate a switching speed of the switch circuit module; and/or,
a current delayed increasing module connected to the switch circuit module, and configured to increase a current in the switch circuit module with a delay.

32. The cleaning apparatus for the surface submerged in the liquid according to claim 31, wherein the switch circuit module comprises a first triode circuit and a second triode circuit that are connected to each other;
the first triode circuit comprises a first triode, a first resistor, a second resistor, and a third resistor; a first terminal of the second resistor is connected to the first resistor, and a second terminal of the second resistor is grounded; and a base of the first triode is connected to a common connection junction between the first resistor and the second resistor, a collector of the first triode is connected to a first terminal of the third resistor, and an emitter of the first triode is grounded; and
the second triode circuit comprises a second triode, a fourth resistor, and a fifth resistor; a second terminal of the third resistor is connected to a first terminal of the fourth resistor; a second terminal of the fourth resistor is connected to the detecting stand set; and a base of the second triode is connected to a common connection junction between the third resistor and the fourth resistor, an emitter of the second triode is connected to the detecting stand set, and a collector of the second triode is connected to the switch assembly through the fifth resistor.

33. The cleaning apparatus for the surface submerged in the liquid according to claim 32, wherein the acceleration module comprises a capacitor; and the capacitor is connected to two terminals of the first resistor in parallel.

34. The cleaning apparatus for the surface submerged in the liquid according to claim 33, wherein the current delayed increasing module comprises an inductor; and a first terminal of the inductor is connected to the detecting stand set, and a second terminal of the inductor is connected to the first resistor through a sixth resistor.

35. The cleaning apparatus for the surface submerged in the liquid according to claim 34, wherein a common connection junction between the first resistor and the sixth resistor is connected to a first terminal of a seventh resistor, and a second terminal of the seventh resistor is grounded.

36. The cleaning apparatus for the surface submerged in the liquid according to any one of claims 28 to 35, wherein the charging pin set at least comprises a positive charging pin and a negative charging pin; and there is at least one detecting pin in the detecting pin set.

37. The cleaning apparatus for the surface submerged in the liquid according to claim 36, wherein the charging stand set at least comprises a positive charging stand corresponding to the positive charging pin and a negative charging stand corresponding to the negative charging pin; a number of detecting stands in the detecting stand set is same as a number of the detecting pins in the detecting pin set; and positions of the detecting stands in the detecting stand set are in one-to-one correspondence with positions of the detecting pins in the detecting pin set.

38. The cleaning apparatus for the surface submerged in the liquid according to claim 37, wherein the positive charging stand is connected to a positive electrode of the cell, and the negative charging stand is connected to a negative electrode of the cell.

39. The cleaning apparatus for the surface submerged in the liquid according to claim 38, wherein the switch assembly is connected between the positive charging stand and the positive electrode of the cell; and alternatively, the switch assembly is connected between the negative charging stand and the negative electrode of the cell.

40. The cleaning apparatus for the surface submerged in the liquid according to claim 39, wherein a first diode is connected between the positive charging stand and the positive electrode of the cell; and a positive electrode of the first diode is connected to the positive charging stand, and a negative electrode of the first diode is connected to the positive electrode of the cell.

41. The cleaning apparatus for the surface submerged in the liquid according to claim 40, wherein a second diode is connected between the detecting stand set and the detection control device; and a positive electrode of the second diode is connected to the detecting stand set, and a negative electrode of the second diode is connected to the detection control device.

42. The cleaning apparatus for the surface submerged in the liquid according to claim 28, wherein the switch assembly is an electronic switch.

43. The cleaning apparatus for the surface submerged in the liquid according to claim 42, wherein the electronic switch is one or more of a metal oxide semiconductor (MOS) transistor, a triode, and a diode.

44. The cleaning apparatus for the surface submerged in the liquid according to claim 9, wherein the partition device comprises a partition element and a sealing element provided at a periphery of the partition element; the partition element contacts an inner wall of the structural main body; and the sealing element seals a contact position between the partition element and the structural main body.

45. The cleaning apparatus for the surface submerged in the liquid according to claim 44, wherein the power device comprises a power assembly and a power transmission assembly connected to the power assembly; and the power assembly drives the power transmission assembly to operate, thereby driving the partition device to move.

46. The cleaning apparatus for the surface submerged in the liquid according to claim 45, wherein the power transmission assembly comprises a rotating element, a movable element provided on the rotating element and configured to move relative to the rotating element, and a telescopic element connected to the movable element; an end of the telescopic element is connected to the partition device; and the rotating element drives the movable element to move, such that the telescopic element is lengthened or shortened to drive the partition device to move.

47. The cleaning apparatus for the surface submerged in the liquid according to claim 46, wherein the telescopic element is a scissor structure; and the rotating element is a lead screw.

48. The cleaning apparatus for the surface submerged in the liquid according to claim 46, wherein the power assembly comprises a power element and a transmission element connected to the power element; and the transmission element is connected to the rotating element, and configured to drive the rotating element to rotate.

49. The cleaning apparatus for the surface submerged in the liquid according to any one of claims 46 to 48, wherein a guiding element is provided on the telescopic element; a sliding chute is formed at a corresponding position on the inner wall of the structural main body; and the guiding element is inserted into the sliding chute and slides along the sliding chute.

50. The cleaning apparatus for the surface submerged in the liquid according to claim 45, wherein the power transmission assembly comprises a first rotating element, a second rotating element, and a flexible element wound on the first rotating element and the second rotating element; the first rotating element is rotatably connected to the partition device; the second rotating element is rotatably connected to the structural main body; one end of the flexible element is connected to the structural main body, and the other end of the flexible element is connected to the power assembly; and the power assembly drives the flexible element to operate, such that the first rotating element and the second rotating element rotate to drive the partition device to move.

51. The cleaning apparatus for the surface submerged in the liquid according to claim 45, wherein the power transmission assembly comprises a third rotating element rotatably connected to the structural main body; one end of the third rotating element is rotatably connected to the partition device, and the other end of the third rotating element is connected to the power assembly; and the third rotating element rotates to drive the partition device to move.

52. The cleaning apparatus for the surface submerged in the liquid according to claim 9, wherein the structural main body is a cylindrical structure with one end closed and the other end open; the open end of the structural main body is provided with an end cover; and a water discharge hole is formed in the end cover.

53. The cleaning apparatus for the surface submerged in the liquid according to claim 52, wherein the airtight space is formed between the partition device and the closed end of the structural main body; and alternatively, a spacer is provided in the structural main body, and the airtight space is formed between the partition device and the spacer.

54. The cleaning apparatus for the surface submerged in the liquid according to claim 53, wherein the power assembly is provided outside the structural main body; and alternatively, the power assembly is provided in a space formed between the spacer and the closed end of the structural main body.
